# EUROPEAN PATENT APPLICATION

(11) **EP 4 533 992 A1**
(43) Date of publication of application: **09.04.2025**
(21) Application number: 23811143.9
(22) Date of filing: 25.05.2023
(51) Int. Cl.: A47L 11/40

(54) **AUTOMATIC WATER CHANGING ASSEMBLY AND SELF-CLEANING MAINTENANCE STATION**

(30) Priority: 25.05.2022 CN 202210574202; 25.05.2022 CN 202210573204; 25.05.2022 CN 202210573525
(71) Applicant: Beijing Roborock Technology Co., Ltd., Beijing 102206 (CN)
(72) Inventor: LI, Xing, Beijing 102206 (CN); CHENG, Pan, Beijing 102206 (CN); WANG, Tao, Beijing 102206 (CN); LIU, Yaoxin, Beijing 102206 (CN); JIN, Tenglong, Beijing 102206 (CN)
(74) Representative: Winter, Brandl - Partnerschaft mbB
(86) International application number: PCT/CN2023/096360
(87) International publication number: WO 2023/227073

(57) **Abstract**

An automatic water changing assembly (7000) and a self-cleaning maintenance station. The automatic water changing assembly (7000) comprises a control device (7100) and a water tank assembly (7200); the control device (7100) is configured to realize automatic clear water adding, automatic sewage discharging or automatic cleaning liquid adding of the water tank assembly (7200); the water tank assembly (7200) is configured to be assembled in a water storage cavity (2700) of the self-cleaning maintenance station; the water tank assembly (7200) comprises a sewage tank (5000), a clear water tank (4000), and a water tank top shell (7300); the water tank top shell (7300) approximately covers the sewage tank (5000) and the clear water tank (4000); the water tank top shell (7300), the sewage tank (5000), and the clear water tank (4000) form an integrated structure; and when the water tank assembly (7200) is assembled in the water storage cavity (2700) of the self-cleaning maintenance station, a part of the box body of the water tank assembly (7200) is located outside the water storage cavity (2700). By designing the water tank assembly (7200) to be of the integrated structure, the assembling of a water tank is facilitated, and a convenient integrated structure is also provided for automatic clear water adding and automatic sewage discharging of the water tank.

## Description

### CROSS-REFERENCE TO RELATED APPLICATION

This application claims priority to Chinese Patent Applications No. 202210574202. 1, No. 202210573204. 9 and No. 202210573525. 9, filed on May 25, 2022, which are incorporated herein by reference in their entireties as a part of the present application.

### TECHNICAL FIELD

The present disclosure relates to the technical field of cleaning devices, and in particular to an automatic water replacement assembly and a self-cleaning maintenance station.

### BACKGROUND ART

In recent years, automatic cleaning devices, with their popularizations, have more and more functions; and particularly, the automatic cleaning devices that are integrated with sweeping, dust suction, mopping, dust removal, mop cloth cleaning and other functions have been applied more and more extensively.

In the related art, automatic dust collection and mop cloth cleaning are carried out on the automatic cleaning device by means of a self-cleaning maintenance station. Therefore, it is necessary to replenish clean water to the self-cleaning maintenance station and remove sewage therefrom. At present, the methods of replenishing clean water to and removing sewage from the self-cleaning maintenance station are all carried out manually, which brings inconvenience to the application of the automatic cleaning device. In addition, due to a separate structural design of a water tank in the related art, it is inconvenient to take and place the water tank, which brings inconvenience to the application of the water tank.

### SUMMARY OF THE INVENTION

Embodiments of the present disclosure provide an automatic water replacement assembly and a self-cleaning maintenance station, which are described as below.

Embodiments of the present disclosure provide an automatic water replacement assembly, including a control apparatus and a water tank assembly, where the control apparatus is configured to realize automatic replenishment of clean water to, automatic discharge of sewage from or automatic replenishment of a cleansing liquid to the water tank assembly, and the water tank assembly is configured to be assembled inside a water storage chamber of a self-cleaning maintenance station;
the water tank assembly includes a sewage tank, a clean water tank and a water tank top shell, the water tank top shell substantially covers the sewage tank and the clean water tank and the water tank top shell, and the sewage tank and the clean water tank form an integrated structure; and
where, a part of a tank body of the water tank assembly is located outside the water storage chamber when the water tank assembly is assembled inside the water storage chamber of the self-cleaning maintenance station.

In some embodiments, the sewage tank and the clean water tank are arranged below the water tank top shell with a space of a preset distance.

In some embodiments, outer walls of the sewage tank and the clean water tank on a same side are provided with recessed portions formed inwardly, top ends of the recessed portions are provided with a sewage port and a clean water port that penetrate upwards, the sewage port is configured for drawing sewage into the sewage tank, and the clean water port is configured for extracting clean water out of the clean water tank.

In some embodiments, a water inlet is included on a side of the water tank top shell, and the water inlet is connected to the clean water tank to realize automatic replenishment of clean water to the clean water tank by the control apparatus.

In some embodiments, an overflow port is further included on a side of the water tank top shell, the overflow port is connected to the clean water tank, and water in the clean water tank is automatically discharged through the overflow port after the clean water tank is full of water.

In some embodiments, a drainage port is further included on a side of the water tank top shell, the drainage port is connected to the sewage tank, and sewage in the sewage tank is automatically discharged through the drainage port after the sewage tank is full of sewage.

In some embodiments, an outer side wall of the sewage tank or the clean water tank is provided with a sensor configured to detect that the sewage tank and the clean water tank are assembled at preset positions.

In some embodiments, the water tank top shell includes a detachable water tank top cover, and top ends of the sewage tank and the clean water tank extend into the water tank top shell.

In some embodiments, a side wall of the water tank top shell extends downwards along side walls of the sewage tank and the clean water tank to form a U-shaped structure and enclose the side walls of the sewage tank and the clean water tank.

In some embodiments, a side wall of the water tank top shell, which is of a U-shaped structure, matches with an edge of an outer side wall of the water storage chamber, and the side wall of the water tank top shell, which is of the U-shaped structure, is located outside the water storage chamber entirely when the water tank assembly is assembled inside the water storage chamber.

In some embodiments, a side wall of the sewage tank includes at least one first recess extending upwards along a bottom of the sewage tank, and a side wall of the clean water tank includes at least one second recess extending upwards form a bottom of the clean water tank, and the first recess and the second recess are configured for limiting at assembly positions of the sewage tank and the clean water tank.

In some embodiments, the sewage tank and the clean water tank are made of transparent materials to facilitate observation of liquid levels in the sewage tank and the clean water tank.

In some embodiments, the clean water tank internally includes:
a clean-water floating ball base, arranged at a bottom of a clean-water tank body; and
a clean-water floating ball, connected to the clean-water floating ball base and configured to detect a water level, where when the water level is lower than a first preset threshold, a water inlet is controlled by the control apparatus to be opened, to replenish clean water to the clean water tank automatically.

In some embodiments, the clean water tank further internally includes:
a cleansing-liquid floating ball base, arranged at a bottom of a cleansing-liquid tank body; and
a cleansing-liquid floating ball, connected to the cleansing-liquid floating ball base and configured to detect a liquid level of a cleansing liquid, where when the liquid level is higher than a second preset threshold, a peristaltic pump is controlled by the control apparatus to replenish the cleansing liquid to the clean water tank.

In some embodiments, the sewage tank internally includes:
a sewage floating ball, arranged at a top of the sewage tank and configured to detect a liquid level of sewage, where when the liquid level is higher than a third preset threshold, a sewage pump and a drain valve are controlled by the control apparatus to be opened successively to discharge sewage out of the sewage tank through a drainage port automatically.

Embodiments of the present disclosure also provide an automatic water replacement assembly, including a main control box and a water tank assembly, where one end of the main control box is connected to a water source by means of a first external water pipe and the other end thereof is connected to the water tank assembly by means of a second external water pipe., where the main control box includes a first electromagnetic valve, a low-pressure switch and a high-pressure switch. The low-pressure switch and the high-pressure switch are configured to generate corresponding triggering signals based on a water pressure state of the second external water pipe, and the first electromagnetic valve is opened or closed in response to the triggering signals, so as to correspondingly control whether water in the water source is able to flow into the second external water pipe through the first external water pipe.

In some embodiments, the water tank assembly includes a second electromagnetic valve. The main control box is configured to: cause the low-pressure switch to generate a low-pressure triggering signal in response to the second electromagnetic valve being opened; and cause the first electromagnetic valve to be opened in response to the low-pressure triggering signal, such that water in the water source flows into the second external water pipe through the first external water pipe and then flows into the water tank assembly.

In some embodiments, the main control box is configured to: cause the high-pressure switch to generate a high-pressure triggering signal in response to the second electromagnetic valve being closed; and cause the first electromagnetic valve to be closed in response to the high-pressure triggering signal.

In some embodiments, the main control box includes:
a box body including a box body water inlet and a box body water outlet, the box body water inlet being connected to a water source by means of the first external water pipe, and the box body water outlet being connected to the water tank assembly by means of the second external water pipe.

In some embodiments, the main control box further includes:
a first water pipe, arranged inside the box body, and one end of the first water pipe being connected to the box body water inlet;
a second water pipe, arranged inside the box body, on end of the second water pipe being connected to the box body water outlet, and the other end of the second water pipe being connected to the first water pipe; and
a third water pipe, arranged inside the box body and connected between the first water pipe and the second water pipe,
where the first electromagnetic valve is arranged in the first water pipe, the high-pressure switch is arranged in the second water pipe, and the low-pressure switch is arranged in the third water pipe.

In some embodiments, the main control box further includes:
a main controller, arranged inside the box body, electrically connected to the first electromagnetic valve, the low-pressure switch and the high-pressure switch, and configured to control, the first electromagnetic valve to be opened or closed based on the triggering signals.

In some embodiments, the main control box further includes:
a pressure-maintaining airbag box, configured to replenish a liquid in the pressure-maintaining airbag box into the third water pipe and the second water pipe when a liquid pressure in the second external water pipe decreases.

In some embodiments, the main control box further includes:
a pressure-maintaining airbag box, in liquid communication with the first water pipe, the second water pipe and the third water pipe respectively, and configured to replenish a liquid in the pressure-maintaining airbag box into the first water pipe, the second water pipe and the third water pipe when a liquid pressure in the first water pipe, the second water pipe and/or the third water pipe decreases.

In some embodiments, the main control box further includes:
a four-way pipe, including four communication interfaces, and connected to the first water pipe, the second water pipe, the third water pipe and the pressure-maintaining airbag box respectively; where the pressure-maintaining airbag box is in liquid communication with the first water pipe, the second water pipe and the third water pipe, respectively, by means of the four-way pipe.

In some embodiments, the pressure-maintaining airbag box includes:
a pressure-maintaining airbag box housing having an opening in a top end thereof; and
an airbag, arranged inside the pressure-maintaining airbag box housing and configured to elastically expand and contract according to the amount of a liquid flowing into or out of the airbag through the opening.

In some embodiments, the airbag includes:
an airbag body, arranged inside the pressure-maintaining airbag box housing and configured to elastically expand and contract according to the amount of a liquid flowing into or out of the airbag;
an airbag end portion, arranged at a top end of the airbag body and substantially flushed with an end portion of the pressure-maintaining airbag box, where the airbag end portion is provided with an airbag opening for the liquid to flow in or out; and
an airbag neck portion, arranged between the airbag body and the airbag end portion.

In some embodiments, the pressure-maintaining airbag box further includes:
an assembly part, including a central hole, where the airbag end portion is assembled at the opening of the pressure-maintaining airbag box housing after the assembly part is sleeved on the airbag neck portion through the central hole.

In some embodiments, the assembly part further includes:
a recessed surface, arranged on a top surface of the assembly part around the central hole and configured to fit the airbag end portion.

In some embodiments, the assembly part further includes:
an edge portion, extending outwards around a top surface of the assembly part and configured to be assembled at a periphery of the opening of the pressure-maintaining airbag box housing.

In some embodiments, the pressure-maintaining airbag box further includes:
a cover body, assembled on the pressure-maintaining airbag box housing and configured to seal the airbag inside the pressure-maintaining airbag box housing by tightly pressing the edge portion.

In some embodiments, the main controller is further configured to: acquire a first time difference between a time that a triggering state of the high-pressure switch changes and a time that a triggering state of the low-pressure switch change when a water pressure in a water passage decreases, and when the first time difference is within a first preset range, determine that a water pipe is leaking, and control a water pipe leakage signal lamp to light up.

In some embodiments, the main controller is further configured to: acquire a second time difference between a time that a triggering state of the high-pressure switch changes and a time that a triggering state of the low-pressure switch changes when a water pressure in a water passage decreases, and when the second time difference is within a second preset range, determine that a water pipe is ruptured, and control a water pipe rupture signal lamp to light up.

In some embodiments, the main controller is further configured to: acquire a third time difference between a time that the high-pressure switch is triggered and a time that the low-pressure switch is triggered when a water pressure in a water passage decreases, and when the third time difference is within a third preset range, determine that water is replenished normally, and control a normal water-replenishing signal lamp to light up.

In some embodiments, the main control box is further configured to:
cause the second electromagnetic valve to be closed within a first preset time period and the first electromagnetic valve to be closed within a second preset time period, where the second preset time period at least partially overlapping with the first preset time period; and
determine that a water pipe is not ruptured if the high-pressure switch is continuously triggered during a time period in which the second preset time period overlaps with the first preset time period.

Embodiments of the present disclosure also provide an automatic water replacement assembly, including: a control apparatus and a water tank assembly, where the control apparatus is arranged inside the water tank assembly and configured to realize automatic replenishment of clean water and automatic replenishment of a cleansing liquid to the water tank assembly; and
the water tank assembly includes a water tank top shell and a clean water tank, the water tank top shell covers the clean water tank, and the clean water tank includes a clean-water tank body and a cleansing-liquid tank body,
where the clean-water tank body internally includes a water amount detection assembly, and in response to the water amount detection assembly detecting that the amount of water in the clean-water tank body reaches a preset value, a preset amount of cleansing liquid is automatically replenished to the clean-water tank body from the cleansing-liquid tank body under the control of the control apparatus.

In some embodiments, the clean water tank includes a clean-water tank top cover covering the clean-water tank body, and the clean-water tank top cover extends into the water tank top shell.

In some embodiments, the clean-water tank top cover includes a groove, and a peristaltic pump is arranged inside the groove and configured to draw the cleansing liquid in the cleansing-liquid tank body into the clean-water tank body under the control of the control apparatus.

In some embodiments, the peristaltic pump includes a liquid inlet and a liquid outlet, the liquid inlet extends to be close to a bottom of the cleansing-liquid tank body through a first liquid delivery pipe, and the liquid outlet extends into the clean-water tank body through a second liquid delivery pipe to draw the cleansing liquid in the cleansing-liquid tank body into the clean-water tank body.

In some embodiments, the cleansing-liquid tank body includes a cleansing liquid channel, the cleansing liquid channel extends upwards from an interior of the cleansing-liquid tank body to the clean-water tank top cover along an exterior of the clean-water tank body, for replenishing the cleansing liquid to the cleansing-liquid tank body.

In some embodiments, the cleansing-liquid tank body includes:
a cleansing-liquid floating ball base, arranged at a bottom of the cleansing-liquid tank body;
a cleansing-liquid floating ball, connected to the cleansing-liquid floating ball base and configured to detect a liquid level of a cleansing liquid;
when the liquid level of the cleansing liquid is lower than a second preset threshold, the cleansing liquid is stopped to be replenished to the clean-water tank body under the control of the control apparatus.

In some embodiments, the water tank assembly includes a cleansing-liquid state indicator lamp, and the cleansing-liquid state indicator lamp is controlled to light up when the liquid level of the cleansing liquid is lower than the second preset threshold.

In some embodiments, a side wall of the water tank top shell extends downwards along a side wall of the clean water tank to form a U-shaped structure and enclose a side wall of the clean-water tank body.

In some embodiments, the clean-water tank body includes:
a clean-water floating ball base, arranged at a bottom of the clean-water tank body; and
a clean-water floating ball, connected to the clean-water floating ball base and configured to detect a water level,
where when the water level is lower than a first preset threshold, a water inlet is controlled by the control apparatus to be opened to replenish clean water to the clean water tank automatically.

In some embodiments, the water amount detection assembly includes: a full-water detection sensor; and
in response to the water amount detection assembly detecting that the amount of water reaches the preset value includes: in response to the full-water detection sensor detecting that the amount of water in the clean-water tank body reaches or approaches a full-water amount.

In some embodiments, the water amount detection assembly includes: a no-water detection sensor; and
in response to the water amount detection assembly detecting that the amount of water reaches the preset value includes: in response to the no-water detection sensor detecting that the amount of water in the clean-water tank body reaches a no-water amount.

Embodiments of the present disclosure also provide a self-cleaning maintenance station, including a water storage chamber being configured to accommodate the automatic water replacement assembly according to any one of the above embodiments.

The embodiments of the present disclosure have the following technical effects.

According to the automatic water replacement assembly provided by the embodiments of the present disclosure, the water tank assembly is controlled by the control apparatus to realize automatic replenishment of clean water to, automatic discharge of sewage from or automatic replenishment of a cleansing liquid to the water tank assembly, which saves manpower and improves the cleaning efficiency. In addition, by designing the water tank assembly into an integrated structure, the assembly of water tanks is facilitated, and a convenient integrated structure is also provided for automatic replenishment of clean water to and automatic discharge of sewage from the water tanks.

According to the automatic water replacement assembly provided by the embodiments of the present disclosure, by adding the main control box, the clean water can be automatically replenished to the clean water tank, which saves manpower and improves the cleaning efficiency. In addition, by adding the pressure-maintaining airbag box, whether the water pipe is leaking or ruptured can be determined punctually when the water pipe is ruptured or leaking, such that the water source can be closed punctually, and an alarm can be given to avoid the risk of water leakage.

According to the automatic water replacement assembly provided by the embodiments of the present disclosure, whether the amount of water in the clean water tank reaches a preset value is detected by the water amount detection assembly in the clean-water tank body, and if yes, a preset amount of cleansing liquid is automatically replenished to the clean-water tank body under the control of the control apparatus. In addition, a preset amount of cleansing liquid can be replenished according to the amount of water in the clean water tank, achieving automatic replenishment of an accurate amount of cleansing liquid.

### BRIEF DESCRIPTION OF THE DRAWINGS

The accompanying drawings, which are incorporated in and constitute a part of the description, illustrate embodiments consistent with the present disclosure and, together with the description, serve to explain the principles of the present disclosure. Apparently, the accompanying drawings in the following descriptions show merely some embodiments of the present disclosure, and those of ordinary skill in the art may still derive other drawings from these accompanying drawings without any creative efforts. In the drawings:
FIG. 1 is a schematic diagram of an integral structure of a self-cleaning maintenance station according to some embodiments of the present disclosure;
FIG. 2 is a schematic diagram of a main body structure of the self-cleaning maintenance station according to some embodiments of the present disclosure;
FIG. 3 is a schematic diagram of a stereoscopic structure of an automatic water replacement assembly according to some embodiments of the present disclosure;
FIG. 4 is a schematic bottom view of the automatic water replacement assembly according to some embodiments of the present disclosure;
FIG. 5 is a schematic structural diagram of the automatic water replacement assembly, viewed from the front, according to some embodiments of the present disclosure;
FIG. 6 is a structural block diagram of the automatic water replacement assembly according to some embodiments of the present disclosure;
FIG. 7 is a schematic diagram of an internal structure of a main control box according to some embodiments of the present disclosure;
FIG. 8 is a schematic diagram of a stereoscopic structure of the main control box according to some embodiments of the present disclosure;
FIG. 9 is a schematic diagram of a sectional structure of the main control box according to some embodiments of the present disclosure;
FIG. 10 is a schematic structural diagram of an airbag according to some embodiments of the present disclosure;
FIG. 11 is a schematic structural diagram of an assembly part according to some embodiments of the present disclosure;
FIG. 12 is a sequence diagram for determining rupture of a water pipe according to some embodiments of the present disclosure;
FIG. 13 is a schematic structural diagram of a top shell of the automatic water replacement assembly according to some embodiments of the present disclosure;
FIG. 14 is a sectional view of a clean water tank according to some embodiments of the present disclosure;
FIG. 15 is a schematic diagram of sectional structure of the clean water tank and a floating valve according to some embodiments of the present disclosure;
FIG. 16 is a schematic diagram of an integral structure of the floating valve according to some embodiments of the present disclosure;
FIG. 17 is a schematic diagram of a blocked water passage structure of the floating valve according to some embodiments of the present disclosure;
FIG. 18 is a schematic structural diagram of a plug body according to some embodiments of the present disclosure;
FIG. 19 is a schematic structural diagram of a fixed jacket according to some embodiments of the present disclosure; and
FIG. 20 is a schematic structural diagram of a sewage tank according to some embodiments of the present disclosure.

### DETAILED DESCRIPTION

For clearer descriptions of the objectives, technical solutions and advantages of the present disclosure, the present disclosure will be described in further detail with reference to the accompanying drawings. Apparently, the described embodiments are only part of, rather than all of the embodiments of the present disclosure. Based on the embodiments of the present disclosure, all other embodiments obtained by those of ordinary skill in the art without any creative efforts shall fall within the scope of protection of the present disclosure.

The terms used in the embodiments of the present disclosure are only intended to describe specific embodiments rather than to limit the present disclosure. The singular forms "a"/"an", "said" and "the" used in the embodiments and the appended claims of the present disclosure are also intended to include the plural forms, and the term "a plurality of" generally means at least two, unless otherwise indicated clearly in the context.

It should be understood that the term "and/or" used herein merely describes an association relationship of associated objects and indicates the existence of three types of relationships. For example, A and/or B, can indicate: A exists alone, A and B exist concurrently, and B exists alone. In addition, the character "/" herein generally indicates that associated objects before and after are in an "or" relationship.

It should be understood that although the terms first, second, third, etc. may be used for description in the embodiments of the present disclosure, these should not be limited to these terms. These terms are only used for distinguishing. For example, without departing from the scope of the present disclosure, first may also be referred to as second, and similarly, second may also be referred to as first.

It should be noted that the term "comprising", "including" or any other variants thereof are intended to cover a non-exclusive inclusion, such that an article or apparatus that includes a series of elements includes not only those elements but also other elements that are not specifically listed, or further includes elements that are inherent to such an article or apparatus. Without more limitations, an element that is defined by the phrase "including a/an ..." does not exclude the presence of additional same elements in the article or apparatus that includes the element.

Alternative embodiments of the present disclosure will be described in detail below with reference to the accompanying drawings.

In the related art, a self-cleaning maintenance station is often of a complex structure, in which a water tank is placed in a complex cover of the self-cleaning maintenance station, such that it is necessary to manually replenish clean water or manually remove sewage. Since clean water is manually replenished after a clean water tank is short of water, the cleaning efficiency is reduced; and since sewage is manually discharged after a sewage tank is full of sewage, the risk of sewage overflow is increased while the cleaning efficiency is reduced, resulting in inconvenience in application. Moreover, the appearance and the structure of the water tank are too messy and are neither neat nor attractive enough. In addition, a connection port of the water tank is placed at the bottom of the water tank, such that water in the water tank is prone to overflow, and devices in the self-cleaning maintenance station may be damaged very easily.

Therefore, embodiments of the present disclosure provide an automatic water replacement assembly, including a water tank top shell, a sewage tank and a clean water tank that are of an integrated structure. It is realized that clean water can be automatically replenished to, sewage can be automatically discharged from or a cleansing liquid can be automatically replenished to the water tank assembly, which saves manpower. Automatic replenishment of clean water is enabled after the clean water tank is short of water, thus improving the cleaning efficiency. Automatic extraction of sewage is enabled after the sewage tank is full, such that the risk of sewage outflow is reduced while the cleaning efficiency is improved. Moreover, the automatic water replacement assembly of the integrated structure has a more concise and attractive appearance. In addition, by designing the water tank assembly into an integrated structure, the assembly of water tanks is facilitated, and a convenient integrated structure is also provided for automatic replenishment of clean water to the water tank and automatic discharge of sewage from the water tank.

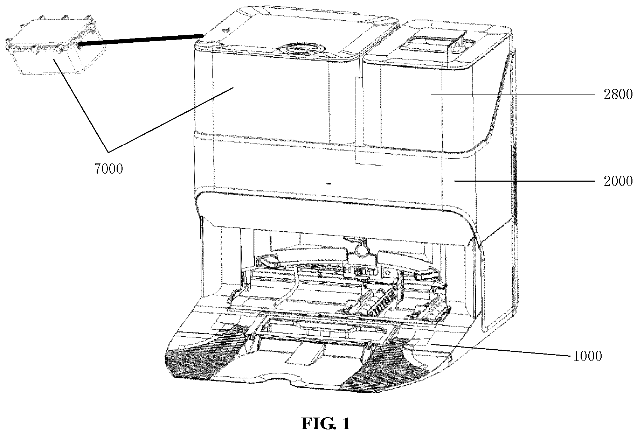

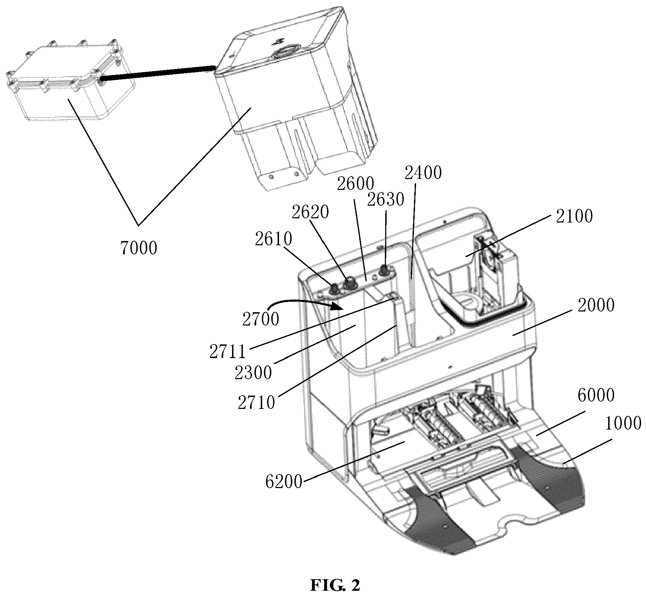

Specifically, the automatic water replacement assembly provided by the embodiments of the present disclosure is assembled in a self-cleaning maintenance station. As an example, FIG. 1 exemplarily shows a schematic diagram of an integral structure in which the automatic water replacement assembly is completely assembled with the self-cleaning maintenance station, and FIG. 2 exemplarily shows a schematic diagram of a separate structure of the automatic water replacement assembly and the self-cleaning maintenance station.

In order to describe the structure of the automatic water replacement assembly more clearly, the following directions are defined with reference to the self-cleaning maintenance station. The self-cleaning maintenance station may be calibrated by the following defined three axes perpendicular to each other: a transverse axis Y, a front-rear axis X and a central vertical axis Z. A direction along an opposite direction to the direction pointed by an arrow of front-rear axis X, i.e., a direction in which an automatic cleaning device enters in to the self-cleaning maintenance station, is designated as "rearward", and a direction along a direction pointed by the arrow of the front-rear axis X, i.e., a direction in which the automatic cleaning device leaves the self-cleaning maintenance station, is designated as "forward". The transverse axis Y is essentially in a width direction of a self-cleaning maintenance station body. The vertical axis Z is in a direction that a bottom surface of the self-cleaning maintenance station extends upwards. The direction of the automatic water replacement assembly is described by XYZ in a normal application state. As shown in FIG. 1, a direction in which a self-cleaning maintenance station bottom plate protrudes from the self-cleaning maintenance station body is forward, a direction facing a rear wall of the self-cleaning maintenance station body is rearward, the automatic water replacement assembly 7000 is located on a right side of the self-cleaning maintenance station, and a dust collection chamber 2100 is located on a left side of the self-cleaning maintenance station.

As shown in FIG. 1, the self-cleaning maintenance station provided by this embodiment includes a self-cleaning maintenance station bottom plate 1000, a self-cleaning maintenance station body 2000, and the automatic water replacement assembly 7000 and a dust collection hood 2800 that are arranged on the self-cleaning maintenance station body 2000. The self-cleaning maintenance station bottom plate 1000 and the self-cleaning maintenance station body 2000 are in detachable or non-detachable connection with each other, which makes it convenient to transport and maintain the self-cleaning maintenance station bottom plate 1000 and the self-cleaning maintenance station body 2000. A lower portion of the self-cleaning maintenance station body 2000 and a body base 6000 jointly form a washing chamber with a forward opening, and the washing chamber is configured to accommodate the automatic cleaning device when the automatic cleaning device returns to the self-cleaning maintenance station for a maintenance operation. The body base 6000 of the self-cleaning maintenance station is provided with a washing tank 6200, which is configured to clean cleaning components on the automatic cleaning device through the washing tank after the automatic cleaning device is adapted to the washing chamber.

As shown in FIG. 2, the self-cleaning maintenance station body 2000 includes a water storage chamber 2700 and the dust collection chamber 2100. The water storage chamber 2700 is arranged at the top of the self-cleaning maintenance station body 2000 in such a way that its opening faces upwards and forwards. The water storage chamber includes a clean water chamber 2400 for accommodating a clean water tank of the automatic water replacement assembly 7000 and a sewage chamber 2300. The dust collection chamber 2100 and the water storage chamber 2700 are arranged at the top end of the self-cleaning maintenance station body 2000 side by side in such a way that an opening of the dust collection chamber 2100 faces upwards and forwards. The upward and forward designs of the water storage chamber 2700 and the dust collection chamber 2100 facilitate mounting and dismounting of the automatic water replacement assembly 7000 and the dust collection hood 2800. Both of the automatic water replacement assembly 7000 and the dust collection hood 2800 are assembled on the self-cleaning maintenance station body 2000 from the upper front side. Such a structural design conforms to users' usage habits. In addition, the upward and forward design facilitates routine maintenance of devices in the water storage chamber 2700 and the dust collection chamber 2100.

As shown in FIG. 2, the water storage chamber 2700 and the dust collection chamber 2100 are defined by a rear wall, a front wall and a plurality of side walls of the self-cleaning maintenance station body 2000. The rear wall and the front wall of the water storage chamber 2700 and the rear wall and the front wall of the dust collection chamber 2100 are coplanar respectively, and a side wall of the water storage chamber 2700 and a side wall of the dust collection chamber 2100 are coplanar. The height of the rear wall of the self-cleaning maintenance station body 2000 is greater than that of the front wall of the self-cleaning maintenance station body 2000. The side walls of the self-cleaning maintenance station body 2000 are connected to the rear wall and the front wall, and end surfaces of the side walls of the self-cleaning maintenance station body 2000 are of arc-shaped structures. The upward and forward designs of the water storage chamber 2700 and the dust collection chamber 2100 facilitate mounting and dismounting of the clean water tank of the automatic water replacement assembly 7000 and the dust collection hood 2800, where the arc-shaped structures ensure the stability and the attractive appearance of the automatic water replacement assembly 7000 and the dust collection hood 2800 mounted in the water storage chamber 2700 and the dust collection chamber 2100 respectively.

The water storage chamber 2700 is configured to accommodate the automatic water replacement assembly 7000 (including a sewage tank 5000 and a clean water tank 4000). The water storage chamber 2700 includes a boss 2600 fitting the rear wall of the water storage chamber 2700 and extending upwards along the bottom of the water storage chamber 2700 to a height slightly less than the height of the rear wall of the water storage chamber. An upper portion of the boss is provided with a plurality of raised openings, the raised opening may be made of but not limited to soft rubber, and the raised opening is configured to be connected to the sewage tank 5000 or the clean water tank 4000 assembled at a corresponding position. The water storage chamber 2700 includes separator plate 2710 extending vertically and dividing the water storage chamber 2700 into two parts, one part is the sewage chamber 2300 for accommodating the sewage tank 5000, and the other part is the clean water chamber 2400 for accommodating the clean water tank 4000. It should be noted that the upper portion of the boss may be a top of the boss, or a side wall of the boss higher than the highest water level of the clean water tank and the sewage tank in an assembled state, which is not limited herein.

In some embodiments, the raised openings include an air pump port 2610 and a sewage tank connection port 2620 which are correspondingly arranged at the top end of the boss 2600 at an assembly position of the sewage tank 5000. An air pump extracts air from the sewage tank 5000 through the air pump port 2610, and the sewage tank 5000 is of a closed structure, such that a negative pressure is formed inside the sewage tank 5000 in the air extraction process, and sewage in the washing tank is extracted into the sewage tank 5000 through a sewage pipe and the sewage tank connection port 2620. A clean-water tank connection port 2630 is correspondingly arranged at the top end of the boss 2600 at an assembly position of the clean water tank 4000. Clean water in the clean water tank 4000 flows onto a scraping part in the washing tank through the clean-water tank connection port 2630 under the action of a peristaltic pump to clean a cleaning head of the automatic cleaning device. The air pump port 2610, the sewage tank connection port 2620, and the clean-water tank connection port 2630 are arranged at the top end of the boss 2600, which prevents water in the clean water tank or the sewage tank from overflowing from the tank and flowing into the clean water chamber or the sewage chamber during replacement of the clean water tank or the sewage tank. Compared with the connection at the bottom end of the clean water chamber or the sewage chamber, the sealed connection with the sewage tank 5000 and the clean water tank 4000 through the air pump port 2610, the sewage tank connection port 2620 and the clean-water tank connection port 2630 at the top end is more convenient in operation.

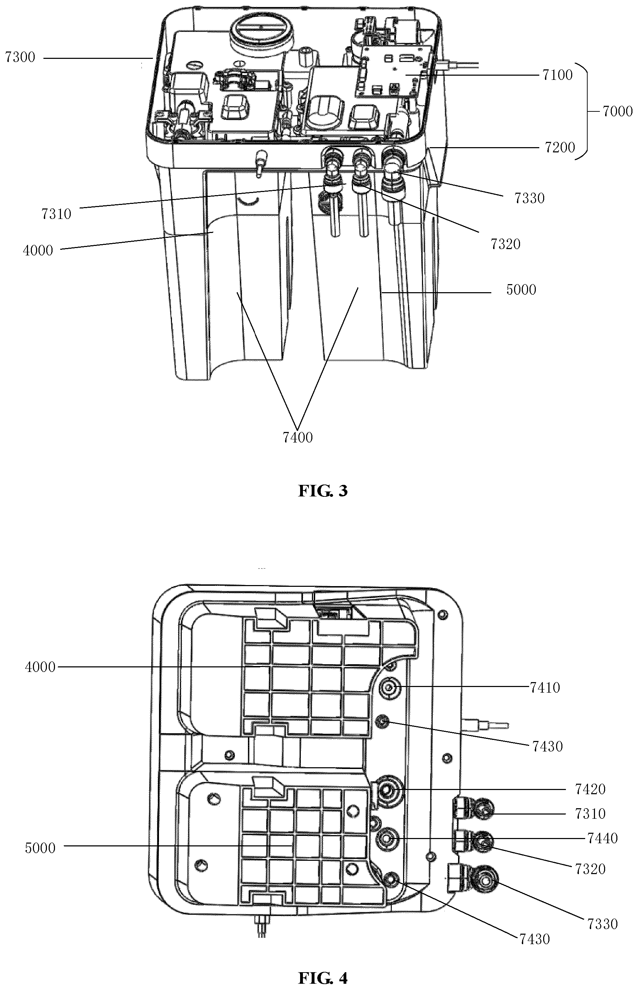

In some embodiments, as shown in FIG. 3, the automatic water replacement assembly 7000 includes a control apparatus 7100 and a water tank assembly 7200. The control apparatus 7100 is arranged inside the water tank assembly 7200. The control apparatus 7100 includes a circuit board and electronic components arranged on the circuit board. The electronic components are electrically connected to electromagnetic valves, floating valves and various sensors in the automatic water replacement assembly 7000, and configured to realize automatic replenishment of clean water to, automatic discharge of sewage from or automatic replenishment of a cleansing liquid to the water tank assembly 7200. The water tank assembly 7200 includes the sewage tank 5000, the clean water tank 4000 and a water tank top shell 7300. The water tank top shell substantially covers the sewage tank and the clean water tank. A rear side of the water tank top shell 7300 protrudes from the water tank assembly 7200, such that the water tank assembly 7200 substantially forms an L-shaped structure. The sewage tank 5000 and the clean water tank 4000 extend into the water tank top shell 7300, where the water tank top shell, the sewage tank and the clean water tank form an integrated structure, which makes the appearance of the water tank more neat and attractive.

As shown in FIG. 3, the sewage tank 5000 and the clean water tank 4000 are arranged below the water tank top shell 7300 with a space of a preset distance. The sewage tank 5000 is inserted into the sewage chamber 2300, the clean water tank 4000 is inserted into the clean water chamber 2400, and the separator plate 2710 is inserted into the space between the sewage tank 5000 and the clean water tank 4000, such that the automatic water replacement assembly 7000 is more stable.

Outer walls of the sewage tank 5000 and the clean water tank 4000 on a same side are provided with inwardly-formed recessed portions 7400, and top ends of the recessed portions 7400 are provided with a sewage port and a clean water port that penetrate upwards. The sewage port is configured for drawing sewage into the sewage tank 5000, and the clean water port is configured for extracting clean water out of the clean water tank 4000. Specifically, the recessed portions 7400 cooperate with at least a part of the boss 2600 for limiting. Top surfaces of the recessed portions 7400 may be provided with the clean water port, the sewage port or a limiting pit, which are connected, in a matching manner, to the air pump port 2610, the sewage tank connection port 2620, the clean-water tank connection port 2630 or a soft rubber bump 2640 arranged on the boss 2600. The automatic water replacement assembly 7000 is relatively accurately arranged at a corresponding position of the water storage chamber 2700 through overall limiting of the limiting pit and the soft rubber bump 2640, so as to prevent the automatic water replacement assembly 7000 from position offset.

Specifically, as shown in FIG. 4, for the clean water tank 4000, the top surface of the recessed portion 7400 is provided with a clean water port 7410. When the clean water tank 4000 is assembled inside the water storage chamber 2700, the recessed portion 7400 of the water tank is exactly carried by the boss 2600 in the water storage chamber 2700, and the clean water port 7410 of the water tank is connected to the raised opening at the top of the boss 2600.

For the sewage tank 5000, the top surface of the recessed portion 7400 is provided with an air pump interface 7420 and a sewage inlet 7440, and the air pump interface 7420 is connected to the air pump connection port 2610 at the top end of the boss 2600. Sewage can be drawn into the sewage tank 5000 after the air pump connection port 2610 is connected to the air pump interface 7420. In some embodiments, the air pump extracts air from the sewage tank 5000 by means of the air pump connection port 2610 and the air pump interface 7420, and the sewage tank 5000 is of a closed structure, such that a negative pressure is formed inside the sewage tank 5000 in the air extraction process, and sewage in the washing tank is drawn into the sewage tank 5000 by means of a sewage pipe, the sewage inlet 7440 and the sewage tank connection port 2620.

The top surface of the recessed portion 7400 may also be provided with a plurality of pits 7430. The top surface of the recessed portion 7400 is exactly carried by the boss 2600 in the water storage chamber 2700 when the automatic water replacement assembly 7000 is assembled in the water storage chamber 2700. The plurality of pits arranged on the top surface of the recessed portion 7400 cooperate with the soft rubber bumps at the top of the boss 2600, such that the automatic water replacement assembly 7000 is limited. Through cooperative limiting by the soft rubber bumps 2640 and the pits, the automatic water replacement assembly 7000 may be at a more accurate position inside the water storage chamber 2700, preventing the automatic water replacement assembly 7000 from position offset.

A rear side of the water tank top shell 7300 includes a water inlet 7310, the water inlet 7310 is connected to the clean water tank 4000 by means of a water pipe, and clean water is automatically replenished to the clean water tank 4000 by the control apparatus 7100. The rear side of the water tank top shell 7300 further includes an overflow port 7320, and the overflow port 7320 is connected to the clean water tank 4000 by means of a water pipe. Water in the clean water tank is automatically discharged through the overflow port 7320 after the clean water tank 4000 is full of water, such that clean water is prevented from flowing into the automatic water replacement assembly 7000 and damaging devices. The rear side of the water tank top shell further includes a drainage port 7330, and the drainage port is connected to the sewage tank by means of a water pipe. Sewage in the sewage tank is automatically discharged through the drainage port after the sewage tank is full of sewage, such that sewage is prevented from flowing into the automatic water replacement assembly 7000 and damaging devices.

An outer side wall of at least one of the sewage tank 5000 and the clean water tank 4000 is provided with a sensor 7500 configured to detect whether the sewage tank 5000 or the clean water tank 4000 is assembled at a preset position. When the sewage tank 5000 or the clean water tank 4000 is not assembled in place, the automatic water replacement assembly 7000 may give an alarm, for example, an indicator lamp may light up.

The water tank top shell 7300 includes a detachable water tank top cover 7340. The top ends of the sewage tank 5000 and the clean water tank 4000 extend into the water tank top shell. The devices in the water tank top shell 7300 can be maintained after the water tank top cover 7340 is opened. The water tank top cover 7340 is provided with a signal lamp, such as a water pipe leakage signal lamp, a water pipe rupture signal lamp, a normal water-replenishing signal lamp, or the like.

A side wall of the water tank top shell 7300 extends downwards along the side walls of the sewage tank 5000 and the clean water tank 4000 to form a U-shaped enclosure structure 7800. The U-shaped enclosure structure 7800 encloses the side walls of the sewage tank 5000 and the clean water tank 4000, and for example, encloses at least part of front side walls and left and right side walls of the sewage tank 5000 and the clean water tank 4000, such that only the U-shaped enclosure structure is exposed outside after the automatic water replacement assembly 7000 is assembled at the top end of the self-cleaning maintenance station, which, as shown in FIG. 1, improves the overall appearance and neatness of the self-cleaning maintenance station. The side wall of the water tank top shell, which is of the U-shaped structure, matches with an edge of an outer side wall of the water storage chamber. When the water tank assembly is assembled inside the water storage chamber, the side wall of the water tank top shell, which is of the U-shaped structure, is flush with the side walls of the self-cleaning maintenance station body 2000, and the side wall of the water tank top shell, which is of the U-shaped structure, is located outside the water storage chamber entirely, such that the side wall of the water tank top shell, which is of the U-shaped structure, and the side walls of the self-cleaning maintenance station body 2000 form an overall outline structure of the self-cleaning maintenance station, which is aesthetically pleasing on the whole and facilitates observation of the liquid level in the water tank assembly.

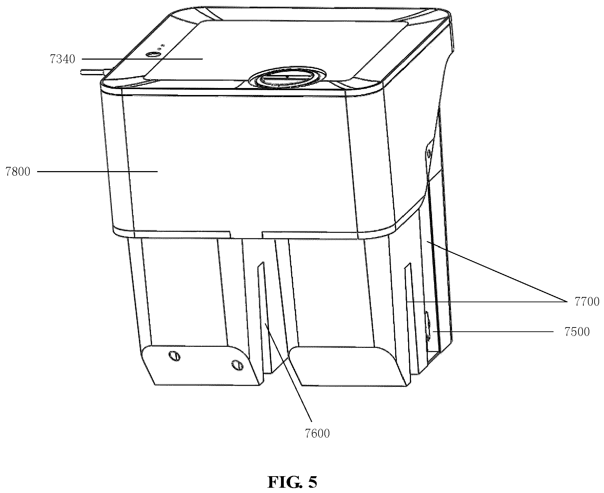

As shown in FIG. 5, a side wall of the sewage tank 5000 includes at least one first recess 7600 extending upwards from a bottom of the sewage tank, and a side wall of the clean water tank 4000 includes at least one second recess 7700 extending upwards from a bottom of the clean water tank. The first recess 7600 and the second recess 7700 are configured for limiting at assembly positions of the sewage tank 5000 and the clean water tank 4000. The sewage tank and the clean water tank are made of transparent materials, which makes it convenient to observe the liquid levels in the sewage tank and the clean water tank.

The clean water tank includes: a clean-water floating ball base arranged at a bottom of a clean-water tank body; and a clean-water floating ball connected to the clean-water floating ball base and configured to detect a water level, where when the water level is lower than a first preset threshold, the control apparatus controls the water inlet to be opened, so as to automatically replenish clean water to the clean water tank. The clean water tank further includes: a cleansing-liquid floating ball base arranged at a bottom of a cleansing-liquid tank body; and a cleansing-liquid floating ball connected to the cleansing-liquid floating ball base and configured to detect a liquid level of a cleansing liquid, where when the liquid level is higher than a second preset threshold, the cleansing liquid is automatically replenished to the clean water tank through controlling of a peristaltic pump. The sewage tank includes a sewage floating ball arranged at a top of the sewage tank and configured to detect a liquid level of sewage, and when the liquid level is higher than a third preset threshold, a sewage pump and a drain valve are opened successively to automatically discharge sewage from the sewage tank through the drainage port.

The automatic water replacement assembly 7000 and the dust collection hood 2800 are arranged at the top end of the self-cleaning maintenance station side by side and behind the clean water tank to form a flat arrangement structure, which, in one aspect, makes it convenient to mount and dismount for use, and in another aspect, is neat and attractive in appearance and enhances the user experience.

After long-term use of the self-cleaning maintenance station, the raised openings may inevitably be contaminated by sewage obtained by cleaning the cleaning components and thus have stains. Through the above arrangement, the raised openings on the boss 2600 are of an open structure relative to the front wall and even relative to the side wall, such that an arm or a cleaning tool may be in contact with the raised openings from various angles, which makes it convenient for a user to clean up dirt accumulated near the raised openings.

When the automatic water replacement assembly 7000 is assembled inside the water storage chamber, the top surface of the automatic water replacement assembly 7000 is higher than the rear wall of the self-cleaning maintenance station body, and a part of a tank body of the automatic water replacement assembly 7000 is located outside the water storage chamber. Through the above design, the material consumption of the self-cleaning maintenance station body is reduced, and the technical effect of a beautiful design is also achieved. Meanwhile, the top of the self-cleaning maintenance station body is designed to have a low front wall and a high rear wall, and the upper front positions of the automatic water replacement assembly 7000 and the dust collecting hood 2800 are also exposed outside chambers, making it convenient for people to observe the water levels in the transparent sewage tank and clean water tank and the situation in the dust collection chamber, and to perform corresponding operations on the sewage tank, the clean water tank and the dust collection chamber punctually.

In the related art, since the clean water tank and the sewage tank of the self-cleaning maintenance station are placed on the self-cleaning maintenance station, it is often necessary to manually replenish clean water, and clean water is manually replenished after the clean water tank is short of water, which reduces the cleaning efficiency.

Therefore, embodiments of the present disclosure also provide an automatic water replacement assembly capable of achieving automatic replenishment of clean water, such that manpower is saved, and a clean water tank short of water can be automatically replenished with clean water, which improves the cleaning efficiency. Furthermore, when the water pipe is ruptured or is leaking, a water source can be closed punctually, and an alarm can be given to avoid water leakage.

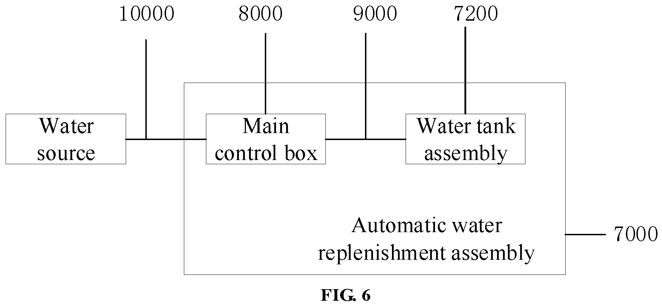

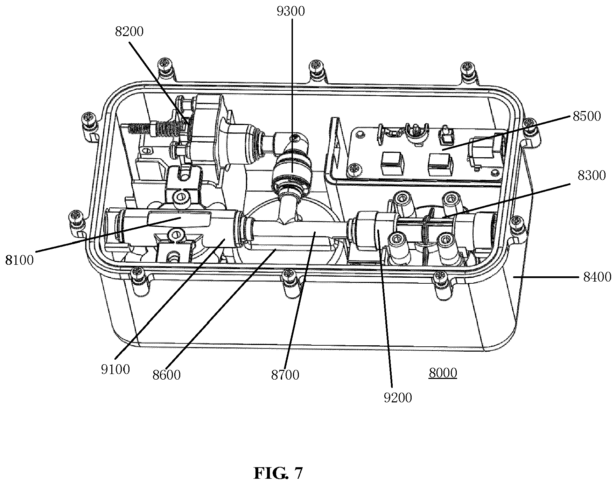

Specifically, the automatic water replacement assembly provided by the embodiments of the present disclosure is assembled in a self-cleaning maintenance station. As an example, as shown in FIG. 6, the automatic water replacement assembly 7000 includes a main control box 8000 and a water tank assembly 7200. One end of the main control box 8000 is connected to the outside of the water tank assembly 7200 by means of a second external water pipe 9000, and the other end of the main control box 8000 is connected to a water source by means of a first external water pipe 10000. The main control box 8000 is configured to at least realize automatic replenishment of clean water to the water tank assembly. As shown in FIG. 7, the main control box 8000 includes a first electromagnetic valve 8100, a low-pressure switch 8200 and a high-pressure switch 8300. The low-pressure switch 8200 and the high-pressure switch 8300 are configured to generate corresponding triggering signals based on a water pressure state of the second external water pipe 9000. The first electromagnetic valve 8100 is opened or closed in response to the triggering signal to correspondingly control that water in the water source may flow into the second external water pipe by means of the first external water pipe. The main control box 8000 may be reset once when the main control box 8000 is mounted for the first time, and in a reset state, the first electromagnetic valve 8100 is opened. At this time, a second electromagnetic valve on a side of the clean water tank is in a closed state, water at the water source flows into the main control box 8000 and the external water pipe and cannot be circulated, and the water pressure in the water pipe increases, causing the high-pressure switch to generate a high-pressure triggering signal and send the high-pressure triggering signal to a main controller 8500 in the main control box 8000. The main controller 8500 sends a closing control signal, and the first electromagnetic valve 8100 is closed in response to the high-pressure triggering signal, such that the water source stops feeding water and the whole water passage is kept filled with clean water.

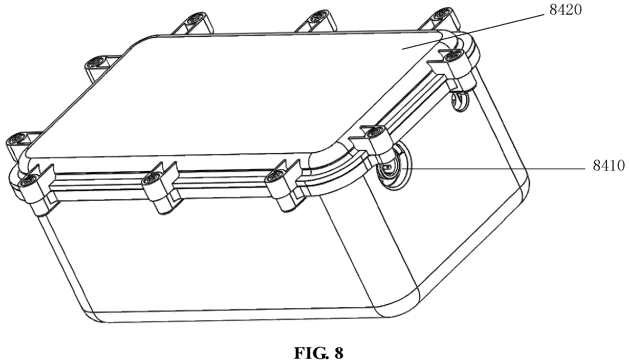

As shown in FIG. 8, the main control box 8000 includes a box body 8400. The box body 8400 includes a box body water inlet (not shown) and a box body water outlet 8410, the box body water inlet is connected to the water source, and the box body water outlet 8410 is connected to the water tank assembly 7200 by means of the second external water pipe 9000. A box body top cover 8420 is arranged at top of the box body 8400, and fixedly connected to the top of the box body 8400 by means of bolts. The box body 8400 may be in the shape of a cuboid, a cube, a sphere, a hemisphere, etc., which is not limited thereto. The box body 8400 may be made of metal, alloy, hard plastic, rubber, etc., which is not limited thereto.

As shown in FIG. 7, the main control box 8000 further includes a main controller 8500. The main controller 8500 is arranged inside the box body 8400, the main controller 8500 is electrically connected to the first electromagnetic valve 8100, the low-pressure switch 8200 and the high-pressure switch 8300, and the main controller 8500 is configured to control, based on the triggering signals, the first electromagnetic valve 8100 to be opened or closed. A second electromagnetic valve 7210 is arranged on a side of the water tank assembly 7200. When the floating valve in the clean water tank 4000 detects that the clean water tank is short of water, a detection signal is sent to the control apparatus 7100, and the control apparatus 7100 controls the second electromagnetic valve 7210 to be opened. At this time, water in the water pipe is injected into the clean water tank 4000, the water pressure in the water pipe decreases, and the low-pressure switch 8200 generates a low-pressure triggering signal and sends the low-pressure triggering signal to the main controller 8500 in the main control box 8000. The main controller 8500 sends an opening control signal. The first electromagnetic valve 8100 is opened in response to the low-pressure triggering signal, and water at the water source enters from the box body water inlet to form a passage from the water source to the clean water tank, thereby achieving automatic replenishment of clean water to the water tank assembly. When a full-water detection sensor (for example, a Hall sensor) in the clean water tank 4000 detects that the clean water tank is full of water, a full-water detection signal is sent to the control apparatus 7100, and the control apparatus 7100 controls the second electromagnetic valve to be closed. At this time, water no longer flows into the clean water tank, and the water pressure in the water pipe increases, such that the high-pressure switch generates a high-pressure triggering signal and sends the high-pressure triggering signal to the main controller 8500 in the main control box 8000. The main controller 8500 sends a closing control signal. The first electromagnetic valve 8100 is closed in response to the high-pressure triggering signal, and the water source stops feeding water, thereby stopping automatic replenishment of clean water to the water tank assembly. Under the control of the main control box, the operations of automatically replenishing clean water and automatically stopping replenishing clean water can be achieved according to the state of the water level of the clean water tank, which saves labors and prevents a dust collection pile from stopping working due to shortage of water, thereby improving the operating efficiency of the automatic cleaning device.

As shown in FIG. 7, the main control box 8000 further includes: a first water pipe 9100 arranged inside the box body 8400, one end of the first water pipe 9100 being connected to the box body water inlet and being connected to the water source by means of the box body water inlet; a second water pipe 9200 arranged inside the box body 8400, one end of the second water pipe 9200 being connected to the box body water outlet 8410 and the other end being connected to the first water pipe 9100; and a third water pipe 9300 arranged inside the box body 8400 and connected between the first water pipe 9100 and the second water pipe 9200. The first electromagnetic valve 8100 is arranged in the pipeline of the first water pipe 9100, the high-pressure switch 8300 is arranged in the pipeline of the second water pipe 9200, and the low-pressure switch 8200 is arranged in the pipeline of the third water pipe. The high-pressure switch 8300 and the low-pressure switch 8200 are pressure sensors. By setting thresholds of the pressure sensors, the pressure sensors have the functions of the high-pressure switch and the low-pressure switch. For example, a low-pressure threshold of the pressure sensor is set such that the low-pressure switch generates a low-pressure triggering signal when the water pressure is lower than the low-pressure threshold, and a high-pressure threshold of the pressure sensor is set such that the high-pressure switch generates a high-pressure triggering signal when the water pressure is higher than the high-pressure threshold. The low-pressure threshold and high-pressure threshold are set according to experimental data, which is not limited herein. The high-pressure switch and the low-pressure switch may respond to different pressure values of a water flow in the water passage respectively, which in turn controls the first electromagnetic valve to be opened or closed, and finally achieves opening and closing of the water passage.

In some embodiments, the main control box 8000 further includes a pressure-maintaining airbag box 8600. A sufficient liquid is pre-stored in the pressure-maintaining airbag box 8600. The pressure-maintaining airbag box 8600 is configured to replenish the third water pipe 9300 and the second water pipe 9200 with the liquid in the pressure-maintaining airbag box when a liquid pressure in the second external water pipe 9000 decreases, to decrease reducing speeds of pressures in the third water pipe 9300 and the second water pipe 9200, thereby increasing a response time differences of the low-pressure switch and the high-pressure switch.

In some embodiments, as shown in FIG. 7, the main control box 8000 further includes a pressure-maintaining airbag box 8600 and a four-way pipe 8700. The pressure-maintaining airbag box 8600 includes an opening 8611, and the four-way pipe 8700 includes four communication interfaces connected to the first water pipe 9100, the second water pipe 9200, the third water pipe 9300 and the opening 8611 of the pressure-maintaining airbag box, respectively. The pressure-maintaining airbag box 8600 is arranged among the first water pipe 9100, the second water pipe 9200 and the third water pipe 9300 by means of the four-way pipe 8700. The pressure-maintaining airbag box is in liquid communication with the first water pipe, the second water pipe and the third water pipe by means of the four-way pipe respectively, and is configured to replenish the first water pipe 9100, the second water pipe 9200 and the third water pipe 9300 with a liquid in the pressure-maintaining airbag box when liquid pressures in the first water pipe 9100, the second water pipe 9200 and the third water pipe 9300 decrease.

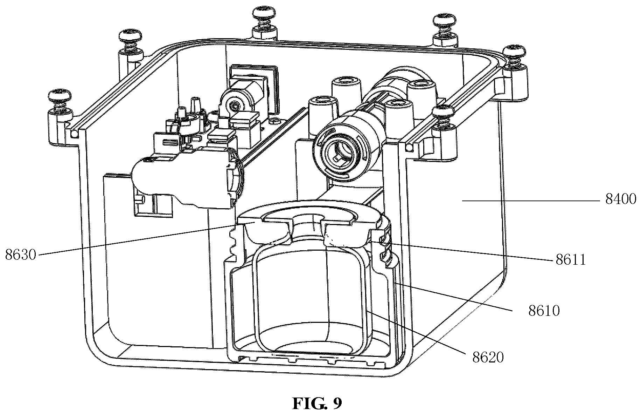

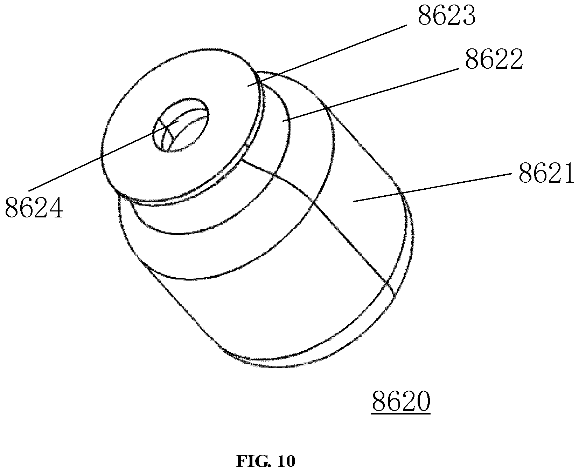

In some embodiments, as shown in FIG. 9, the pressure-maintaining airbag box 8600 includes a pressure-maintaining airbag box housing 8610, an airbag 8620 and an assembly part 8630. The airbag 8620 is assembled inside the pressure-maintaining airbag box housing 8610 by means of the assembly part 8630. The top end of the pressure-maintaining airbag box housing 8610 is provided with an opening 8611. The airbag 8620 is arranged inside the pressure-maintaining airbag box housing 8610 and configured to elastically expand and contract according to the amount of a liquid flowing into or out of the airbag through the opening. The airbag 8620 is made of a flexible elastic material and can expand or contract according to the amount of the liquid flowing into the airbag 8620. As shown in FIG. 10, the airbag 8620 includes an airbag body 8621, an airbag neck portion 8622, and an airbag end portion 8623. The airbag body 8621 is arranged inside the pressure-maintaining airbag box housing 8610 and configured to elastically expand and contract according to the amount of the liquid flowing into or out of the airbag 8620. The airbag end portion 8622 is arranged at the top end of the airbag body 8621 and is substantially flush with the end portion of the pressure-maintaining airbag box. The airbag end portion 8623 has an airbag opening 8624 for the liquid to flowing in or out. The airbag neck portion 8622 is arranged between the airbag body 8621 and the airbag end portion 8623, and is in snap-fit with the assembly part 8630.

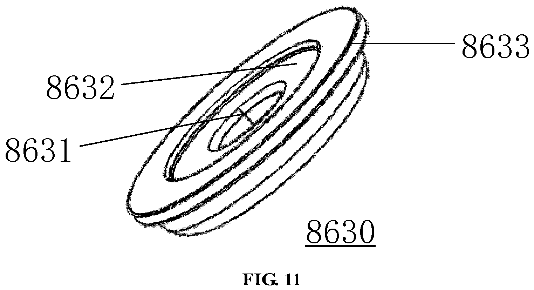

In some embodiments, as shown in FIG. 11, the assembly part 8630 includes a central hole 8631, and the airbag end portion 8623 is assembled at the opening of the pressure-maintaining airbag box housing 8610 after the assembly part 8630 is sleeved on the airbag neck portion 8622 through the central hole 8631. An upper surface of the assembly part 8630 further includes a recessed surface 8632, the recessed surface 8632 is arranged on the top surface of the assembly part around the central hole 8631, and the recessed surface 8632 is configured to fit the airbag end portion 8623. The airbag end portion 8623 passes through the central hole 8631 and then fits the recessed surface 8632, such that the airbag end portion 8623 is substantially flush with the upper surface of the assembly part 8630. The assembly part 8630 further includes an edge portion 8633. The edge portion 8633 extends outwards around the top surface of the assembly part and is configured to be clamped with the periphery of the opening 8611 of the pressure-maintaining airbag box housing after the assembly part 8630 is assembled at the opening 8611 of the pressure-maintaining airbag box housing, thereby achieving internal sealing of the pressure-maintaining airbag box 8600. The pressure-maintaining airbag box further includes a cover body (not shown), and the cover body of the pressure-maintaining airbag box is assembled on the pressure-maintaining airbag box housing, and is configured to seal the airbag 8620 in the pressure-maintaining airbag box housing 8610 by pressing the edge portion 8633.

After the first reset, a control button of the main control box is first switched on after lines and pipelines of the water tank assembly and the main control box are well connected. At this time, the first electromagnetic valve of the main control box may be opened for a period of time and then closed, for example, be opened for 2s. Both of the first electromagnetic valve and the second electromagnetic valve are closed, and the water passage between the first electromagnetic valve and the second electromagnetic valve is full of clean water. At this time, the water passage is in a high-pressure state, the high-pressure switch is in a continuous triggering state, and the first electromagnetic valve is also in a closed state in response to the state of the high-pressure switch. When the liquid leaks slowly due to the rupture of the external water pipe, the water pressure in the external water pipe decreases slowly, and the continuous triggering state of the high-pressure switch is stopped. At this time, the liquid in the pressure-maintaining airbag box is replenished into the water passage due to contraction of the airbag, which decreases the reducing speed of the water pressure in the water passage. When the liquid in the pressure-maintaining airbag box cannot be replenished to the water passage, the water pressure in the water passage may continue to decrease with the leakage of the water pipe until the water pressure reaches a triggering threshold of the low-pressure switch. The main controller records a first time difference t1 between the time when the triggering states of the high-pressure switch changes and the time when the low-pressure switch changes. If the first time difference t1 is within a first preset range, it is believed that the water pipe leaks, and a water pipe leakage alarm signal is sent out. The first preset range may be set according to experimental data, for example, more than 10 seconds. When t1 is more than 10 seconds, it is believed that the water pipe leaks, and a water pipe leakage alarm signal is sent out. For example, a water pipe leakage signal lamp lights up and/or a buzzer alarm is given.

In some embodiments, when the liquid leaks due to the rupture of the external water pipe, if the rupture is not serious enough and the external water pipe is not in a slight leaking state, the water pressure in the external water pipe also decreases rapidly, and the continuous triggering state of the high-pressure switch is stopped. At this time, the liquid in the pressure-maintaining airbag box is replenished to the water passage due to the contraction of the airbag. Due to quick leakage of water in the external water pipe, the pressure-maintaining airbag box decreases the reducing speed of the water pressure in the water passage only within a short period of time. The water pressure in the water passage decreases rapidly with the rupture of the water pipe and reaches the triggering threshold of the low-pressure switch within a short period of time when the liquid in the pressure-maintaining airbag box cannot be replenished into the water passage. The main controller records a second time difference t2 between the time when the high-pressure switch is triggered and the time when the low-pressure switch is triggered. If the second time difference t2 is within a second preset range, it is believed that the water pipe is ruptured and a water pipe rapture alarm signal is sent out. For example, the second preset range may be set according to experimental data, for example, 3-10 seconds. When t2 is 3-10 seconds, it is believed that the water pipe is ruptured, and a water pipe rupture alarm signal is sent out. For example, a water pipe rupture signal lamp lights up and/or a buzzer alarm is given.

In some embodiments, when the second electromagnetic valve of the clean water tank is opened for normal water replenishment, the water pressure in the external water pipe decreases rapidly, and the continuous triggering state of the high-pressure switch is stopped. At this time, the liquid in the pressure-maintaining airbag box may be replenished into the water passage due to the contraction of the airbag. Since the speed of the water flow in the external water pipe is very high, the pressure-maintaining airbag box may only decrease the reducing speed of the water pressure in the water path in an instant. When the liquid in the pressure-maintaining airbag box cannot be replenished into the water passage, the water pressure in the water passage reaches the triggering threshold of the low-pressure switch within a very short period of time. The main controller records a third time difference t3 between the time when the high-pressure switch is triggered and the time when the low-pressure switch is triggered. If the third time difference t3 is within a third preset range, it is believed that water is replenished normally, an alarm signal is not sent out, and a normal water replacement signal may be sent out. The third preset range may be set according to experimental data, for example, 0-3 seconds. When t3 is 0-3 seconds, it is believed that water is replenished normally, and a normal water replacement signal may be sent out. For example, a normal water replacement signal lamp is turned on, and the normal water replacement signal lamp is turned off upon completion of water replenishment.

In some embodiments, when the liquid leaks quickly due to the rupture of the external water pipe, a time period during which the rupture of the water pipe results in serious leakage of the water flow, approaches an interval between the time when the high-pressure switch is triggered and the time when the low-pressure switch is triggered when the second electromagnetic valve is opened during normal water replenishment, and for example, is also within the third preset range, such that the main controller cannot determine whether water is replenished normally or the water pipe is ruptured. At this time, control can be carried out through the following control logic. The main control box is further configured to: cause the second electromagnetic valve to be closed within a first preset time period and the first electromagnetic valve to be closed within a second preset time period, where the second preset time period at least partially overlaps the first preset time period. If the high-pressure switch is continuously triggered during a time period in which the second preset time period overlaps the first preset time period, it is determined that the water pipe is not ruptured. The expression "at least partially overlap" may mean that the second preset time period is a part of the first preset time period.

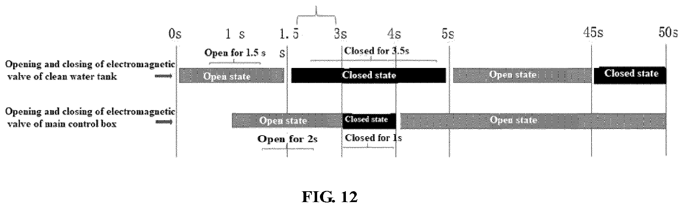

As shown in FIG. 12, the situation of detecting whether the water pipe is ruptured or not can be explained by the sequence diagram. When the water level of the clean water tank reaches a detection level of a no-water detection sensor (for example, a no-water Hall sensor), the second electromagnetic valve of the clean water tank is opened, for which the time is recorded as 0th second. Water in the pipeline may be released, the pressure in the pipeline reduces accordingly, the low-pressure switch is triggered, and the first electromagnetic valve is opened, for which the time is for example recorded as the 1th second. Water in a faucet is replenished into the pipeline, and then the second electromagnetic valve is closed, for which the time is for example recorded as the 1.5th second. After a preset period of time, the first electromagnetic valve is closed, for which the time is for example recorded as the 3th second, that is, after the second electromagnetic valve is closed, the first electromagnetic valve is closed after water is continuously fed for 1.5 seconds. A high pressure is maintained in the pipeline during this period of time. That is, water is filled for a period of time, for example, 2s, before each water replenishment, to detect whether a high-pressure state can be maintained in the pipeline. The first electromagnetic valve is closed for 1 second and then opened, for which the time is for example recorded as the 4th second. If the pipeline is not ruptured within 1 second in which both of the first electromagnetic valve and the second electromagnetic valve are closed, the high pressure is maintained in the pipeline; and if the pipeline is ruptured, the high pressure cannot be maintained in the pipeline. Therefore, if the high-pressure state can be reached during this period of time, it can be determined that the water pipe is not ruptured. Then, the second electromagnetic valve is opened at, for example, the 5th second to start normal water replenishment, and is not closed until the clean water tank is full. This can avoid the problem that water leakage becomes more and more serious due to continuous water replenishment when the water pipe is ruptured.

According to the embodiments of the present disclosure, by adding the main control box, clean water can be automatically replenished to the clean water tank, which saves manpower and improves the cleaning efficiency. In addition, by adding the pressure-maintaining airbag box, whether the water pipe leaks or is ruptured can be determined punctually when the water pipe is ruptured or leaks, such that the water source can be closed punctually and an alarm can be given to avoid the risk of water leakage.

In the related art, in order to improve the cleaning effect, it is necessary to replenish a cleansing liquid to a clean water tank, for example, the cleansing liquid can be replenished manually. However, when clean water is automatically replenished to the clean water tank, it is often necessary to remind the user to manually replenish the cleaning fluid, such that the reminder cost is increased and the addition of the cleaning fluid is easily missed, which causes inconvenience to the application of the automatic cleaning device and reduces the cleaning efficiency.

Therefore, embodiments of the present disclosure also provide an automatic water replacement assembly capable of automatically replenishing clean water and automatically replenishing a cleansing liquid, such that the convenience in use by the user is improved, the clean water tank short of water can be automatically replenished with clean water, and a preset amount of cleansing liquid can be automatically replenished, thereby improving the timeliness, convenience and accuracy in replenishing the cleansing liquid.

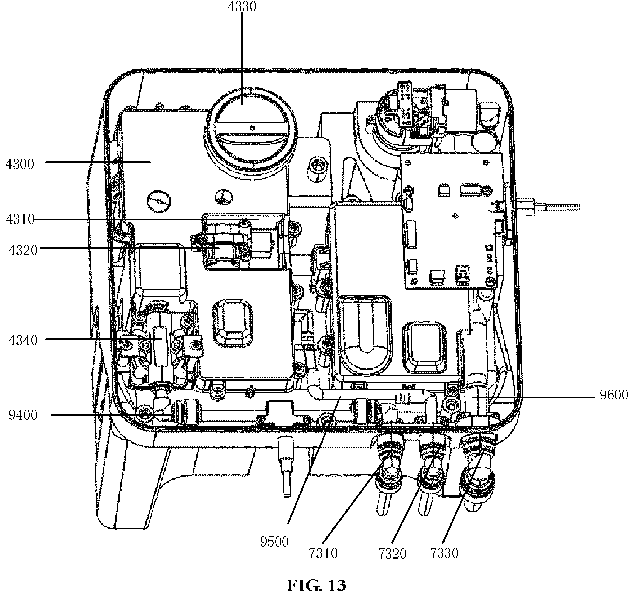

Specifically, the automatic water replacement assembly provided by the embodiments of the present disclosure is assembled in a self-cleaning maintenance station. As an example, as shown in FIG. 3, the automatic water replacement assembly 7000 includes a control apparatus 7100 and a water tank assembly 7200. The control apparatus 7100 is arranged inside the water tank assembly 7200, and the control apparatus 7100 is configured to realize automatic replenishment of clean water and/or a cleansing liquid to the water tank assembly 7200. Specifically, as shown in FIG. 13, the water tank assembly 7200 includes a water tank top shell 7300 and a clean water tank 4000. The water tank top shell 7300 covers the clean water tank 4000. A water inlet 7310, an overflow port 7320 and a drainage port 7330 are arranged on the rear side of the water tank top shell 7300. The outer side of the water inlet 7310 is connected to a supply side of a water source, and the inner side of the water inlet 7310 is connected to the clean water tank 4000 by means of a clean-water tank water inlet pipe 9400. A side of the clean-water tank water inlet pipe 9400 close to the clean water tank 4000 is provided with a second electromagnetic valve 4340. The second electromagnetic valve 4340 is opened or closed to achieve the function of automatically replenishing clean water to the clean water tank 4000. The outer side of the overflow port 7320 is communicated with the outer side of the automatic water replacement assembly 7000, for discharging clean water overflowing from the clean water tank. The inner side of the overflow port 7320 is connected to the top of the side surface of the clean water tank 4000 by means of a clean-water tank overflow pipe 9500, for discharging overflowing water. The outer side of the drainage port 7330 is communicate with the outer side of the automatic water replacement assembly 7000, for discharging sewage from the sewage tank 5000. The inner side of the drainage port 7330 is connected to a drainage pump 5200 of the sewage tank 5000 by means of a sewage tank drainage pipe 9600. The clean water tank 4000 includes a clean-water tank body 4100 and a cleansing-liquid tank body 4200. As shown in FIG. 5, the clean-water tank body 4100 and the cleansing-liquid tank body 4200 may be stacked vertically. Preferably, the cleansing-liquid tank body 4200 is located at an upper portion, which is conducive to conveying a cleansing liquid contained in the cleansing-liquid tank body 4200 to the clean-water tank body 4100. The clean-water tank body 4100 includes a full-water detection sensor 4110. A preset amount of cleansing liquid is automatically replenished to the clean-water tank body 4100 under the control of the control apparatus 7100 when the full-water detection sensor 4110 is triggered. In some embodiments, the clean-water tank body 4100 includes a no-water detection sensor, and a preset amount of cleansing liquid is automatically replenished to the clean-water tank body 4100 under the control of the control apparatus 7100 when the no-water detection sensor is triggered. In this way, by arranging a water amount detection assembly (including the no-water detection sensor or the full-water detection sensor), the cleansing liquid can be automatically replenished when the clean-water tank body is full of water or has no water. Of course, the water amount detection assembly may also be configured to be triggered in response to the amount of water in the clean-water tank body reaching a preset position between a full-water position and a no-water position.

In some embodiments, the clean water tank 4000 includes a clean-water tank top cover 4300 covering the clean-water tank body 4100, and the clean-water tank top cover 4300 extends into the water tank top shell 7300.

In some embodiments, as shown in FIG. 13, the clean-water tank top cover 4300 includes a groove 4310, a peristaltic pump 4320 is arranged inside the groove 4310, and the peristaltic pump 4320 is configured to draw the cleansing liquid from the cleansing-liquid tank body 4200 to the clean-water tank body 4100 under the control of the control apparatus 7100. The peristaltic pump is arranged at the top end of the clean-water tank top cover 4300, which makes it convenient to maintain and replace the peristaltic pump, facilitates electrical connection to the control apparatus 7100, shortens a communication line with the control apparatus 7100, and improves the control accuracy and timeliness.

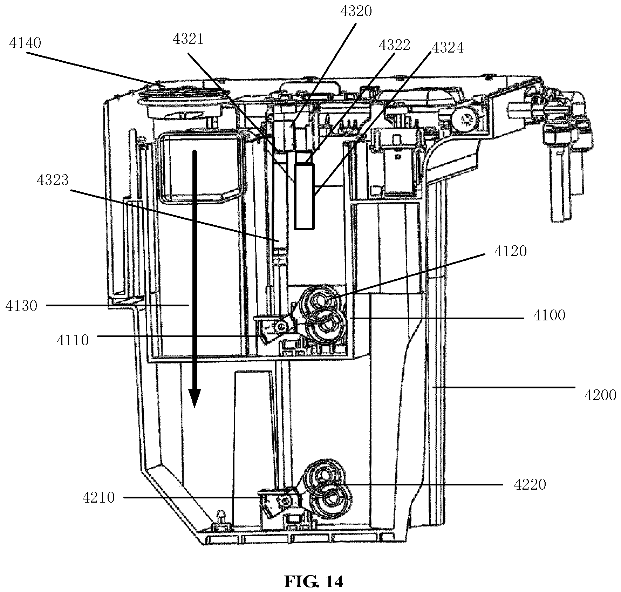

In some embodiments, as shown in FIG. 14, the peristaltic pump 4320 includes a liquid inlet 4321 and a liquid outlet 4322. The liquid inlet 4321 extends into a position be close to a bottom of the cleansing-liquid tank body 4200 through a first liquid delivery pipe 4323 and the liquid outlet 4321 extends into the clean-water tank body 4100 through a second liquid delivery pipe 4324. When the water level in the clean-water tank body 4100 reaches a preset position, the control apparatus 7100 controls the peristaltic pump 4320 to draw the cleansing liquid from the cleansing-liquid tank body 4200 to the clean-water tank body 4100 through the first liquid delivery pipe 4323, to achieve automatic replenishment of the cleansing liquid.

In some embodiments, as shown in FIG. 14, the cleansing-liquid tank body 4200 includes a cleansing liquid channel 4130. The cleansing liquid channel 4130 extends upwards from an interior of the cleansing-liquid tank body 4200 to the clean-water tank top cover along an exterior of the clean-water tank body 4100, as indicated by the arrow in FIG. 14, and is configured to replenish the cleansing liquid to the cleansing-liquid tank body. A cleansing-liquid channel cover 4140 is arranged at the top end of the cleansing liquid channel 4130. The cleansing-liquid channel cover 4140 is opened when the cleansing liquid needs to be replenished, to replenish the cleansing liquid to the cleansing-liquid tank body 4200.

In some embodiments, the cleansing-liquid tank body 4200 includes a cleansing-liquid floating ball base 4210 and a cleansing-liquid floating ball 4220. The cleansing-liquid floating ball base 4210 is arranged at the bottom of the cleansing-liquid tank body 4200. The cleansing-liquid floating ball 4220 is rotationally connected to the cleansing-liquid floating ball base, and configured to detect a liquid level of the cleansing liquid. The cleansing-liquid floating ball 4220 descends with the decrease of the liquid level of the cleansing liquid under the action of gravity. When the cleansing-liquid floating ball 4220 descends to a second preset threshold, the control apparatus recognizes that the cleansing liquid in the cleansing-liquid tank body 4200 is exhausted or is to be exhausted. At this time, when the clean-water tank body 4100 is full of water and needs to be replenished with the cleansing liquid, the control apparatus may no longer control the peristaltic pump to work and stop replenishing the cleansing liquid to the clean-water tank body.

In some embodiments, the water tank assembly includes a cleansing-liquid state indicator lamp, and the cleansing-liquid state indicator lamp is controlled to light up when the liquid level of the cleansing liquid is lower than the second preset threshold.

In some embodiments, a side wall of the water tank top shell extends downwards along a side wall of the clean water tank to form a U-shaped structure to enclose the side wall of the clean-water tank body.

In some embodiments, the clean-water tank body 4100 includes a clean-water floating ball base 4110 and a clean-water floating ball 4120. The clean-water floating ball base 4110 is arranged at the bottom of the clean-water tank body 4100. The clean-water floating ball 4120 is rotationally connected to the clean-water floating ball base 4110, and configured to detect a water level. The clean-water floating ball 4120 descends with the decrease of the liquid level of clean water under the action of gravity. When the clean-water floating ball 4120 descends to a first preset threshold, the control apparatus recognizes that clean water in the clean-water tank body 4100 is exhausted. When the water level is lower than the first preset threshold, the control apparatus controls the second electromagnetic valve 4340 to be opened to automatically replenish clean water to the clean water tank. The process of automatically replenishing clean water is as described in the above embodiments, and will not be repeated here.

According to the embodiments of the present disclosure, whether the clean water tank is full of water is detected by the full-water detection sensor in the clean-water tank body, and if yes, a preset amount of cleansing liquid is automatically replenished to the clean-water tank body under the control of the control apparatus. In addition, a preset amount of cleansing liquid can be replenished according to the amount of water in the clean water tank, thereby achieving automatic replenishment of an accurate amount of cleansing liquid.

In the related art, a valve for replenishing clean water cannot be closed automatically after the water tank assembly is full of clean water, resulting in overflow of clean water. Although the automatic water replacement assembly can realize automatic replenishment of clean water, inconvenience may be brought to the application of the automatic water replacement assembly since the valve cannot be automatically closed.

Therefore, embodiments of the present disclosure also provide an automatic water replacement assembly that achieves dual control by means of a floating valve structure and its attached sensor, which avoids, to the maximum extent, the risk of overflow when the clean water tank is full, thereby improving the safety in application of the automatic water replacement assembly.

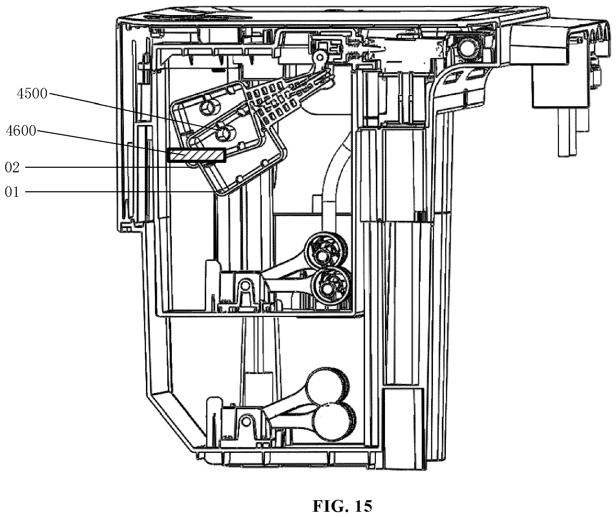

Specifically, embodiments of the present disclosure provide an automatic water replacement assembly assembled in a self-cleaning maintenance station. As an example, as shown in FIG. 3, the automatic water replacement assembly 7000 includes a control apparatus 7100 and a water tank assembly 7200. The control apparatus 7100 is arranged inside the water tank assembly 7200, and the control apparatus 7100 is configured to realize automatically replenishing clean water to the water tank assembly 7200 and/or automatically closing a second electromagnetic valve 4330 for replenishing clean water. Specifically, as shown in FIG. 13, the water tank assembly 7200 includes: a clean-water tank body 4100; a water inlet pipe 9400 configured to replenish the clean water to the clean-water tank body 4100; and a floating valve 4400 arranged in the clean-water tank body 4100 and configured to move up and down with the change of the water level in the clean-water tank body 4100. In response to the floating valve 4400 being located at a first position 01, the control apparatus controls the water inlet pipe 9400 to stop replenishing clean water to the clean-water tank body 4100. In response to the floating valve 4400 being located at a second position 02, the floating valve 4400 blocks an outlet 9410 of the water inlet pipe 9400 for injecting water into the clean-water tank body 4100, as shown in FIG. 15.

The first position 01 may be a point position or an interval position. At the first position 01, after the floating valve 4400 reaches the first position 01 with the rising of the water level in the clean-water tank body 4100, the control apparatus receives sensing information, indicating that the water level in the clean-water tank body 4100 has reached a preset full-water position. This can be specifically achieved in the following ways.

In some embodiments, the automatic water replacement assembly includes: a signal transmitting component 4500 configured to transmit a sensing signal; and a signal sensing component 4600 configured to receive the sensing signal. Any one of the signal transmitting component 4500 and the signal sensing component 4600 is arranged inside a floating portion 4420, and the other of the signal transmitting component 4500 and the signal sensing component 4600 is arranged on the inner side wall of the clean-water tank body 4100; that is, the positions of the signal transmitting component 4500 and the signal sensing component 4600 are interchangeable without influencing generation of full-water sensing information. When the floating portion 4420 moves such that the floating valve 4400 is located at the first position, the signal sensing component 4600 is triggered such that the control apparatus 7100 closes the second electromagnetic valve 4340, and in turn controls the water inlet pipe 9400 to stop replenishing clean water to the clean-water tank body 4100. When the control apparatus 7100 successfully closes the second electromagnetic valve 4340 and the water inlet pipe 9400 stops replenishing clean water to the clean-water tank body 4100, the floating valve 4400 may not rise any more, that is, the function of closing the water inlet pipe is implemented at one time.

In some embodiments, the signal transmitting component 4500 includes a magnet, and the signal sensing component 4600 includes a Hall element; or, the signal transmitting component 4500 is an NFC card reading module, and the signal sensing component 4600 is an NFC tag; or the signal transmitting component 4500 is an RFID reader, and the signal sensing component 4600 is an RFID electronic tag, which is not limited herein. Any sensor capable of achieving position sensing can be applied in the embodiments.

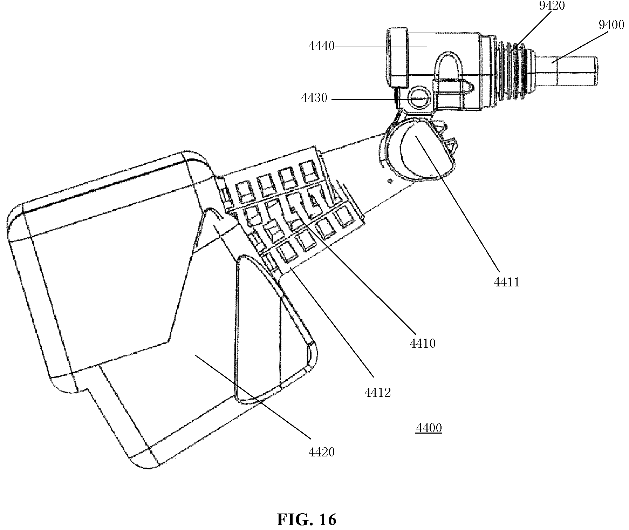

In some embodiments, as shown in FIG. 16, the floating valve 4400 includes a pivot rod 4410. The pivot rod 4410 includes a first end portion 4411. The first end portion 4411 is pivotally connected to a fixed rotating shaft 4430 and pivotally connected to a fixed jacket 4440 by means of the rotating shaft 4430. The pivot rod 4410 includes a second end portion 4412. The second end portion 4412 is opposite to the first end portion 4411. The floating valve 4400 includes a floating portion 4420. The floating portion 4420 is connected to the second end portion 4412 and configured to rotate relative to the first end portion 4411 of the pivot rod 4410 as the water level in the clean-water tank body rises until the floating valve 4400 is located at a first position. Specifically, the floating portion 4420 is of a hollow structure, in which a signal transmitting component 4500 or a signal sensing component 4600 is included. The floating portion 4420 may be made of a light material, such as plastic and rubber; or light metal, so as to provide upward buoyancy for the floating valve 4400, which in turn drives the pivot rod 4410 to rotate upwards. The pivot rod 4410 may also be a hollow or hollowed-out structure, and may be made of a light material, such as plastic and rubber; or light metal, so as to provide upward buoyancy for the floating valve 4400.

In some embodiments, in response to the floating valve 4400 being located at the first position 01 and the water level of the clean-water tank body continuing to rise, the floating portion 4420 drives the pivot rod 4410 to rotate relative to the fixed rotating shaft 4430 until the floating valve 4400 is located at the second position 02. When the floating valve 4400 is located at the first position 01, in a normal state, the control apparatus 7100 determines that the clean water tank is full of water due to the responses of the signal transmitting component 4500 and the signal sensing component 4600. At this time, the second electromagnetic valve 4340 is closed, and the water inlet pipe 9400 is stopped replenishing clean water into the clean-water tank body 4100. However, due to failures of the signal transmitting component 4500 and the signal sensing component 4600 or the like, the control apparatus 7100 fails to close the second electromagnetic valve 4340, and the water inlet pipe 9400 is not stopped replenishing clean water into the clean-water tank body 4100. At this time, the floating valve 4400 continues to rise with the water level of the clean-water tank body, and the floating portion 4420 drives the pivot rod 4410 to rotate relative to the fixed rotating shaft 4430 until the floating valve 4400 is located at the second position 02. The first end 4411 of the floating valve 4400 may block the outlet 9410 of the water inlet pipe 9400 through which water is injected into the clean-water tank body 4100, thus forcibly stopping an injection action of the water inlet pipe and avoiding the risk of water overflow.

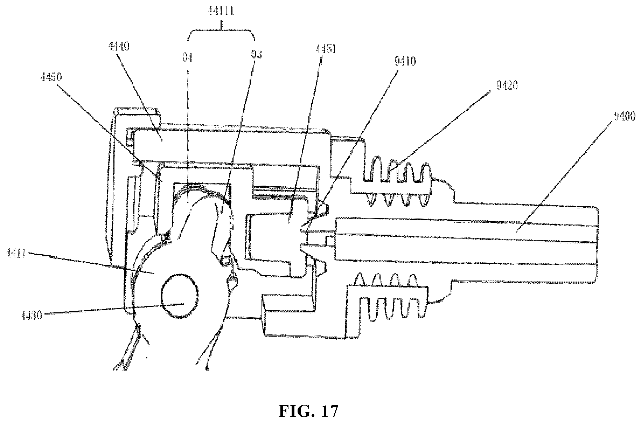

Specifically, as shown in FIG. 17, in some embodiments, the floating valve 4400 further includes a plug body 4450 movably connected to the first end portion 4411 of the pivot rod 4410 and configured to move toward or away from the outlet 9410 of the water inlet pipe 9400 under the push of a push rod 44111 of the first end portion 4411 of the pivot rod 4410, to a third position 03 or a fourth position 04 as shown in FIG. 17, so as to block or unblock the outlet 9410 of the water inlet pipe.

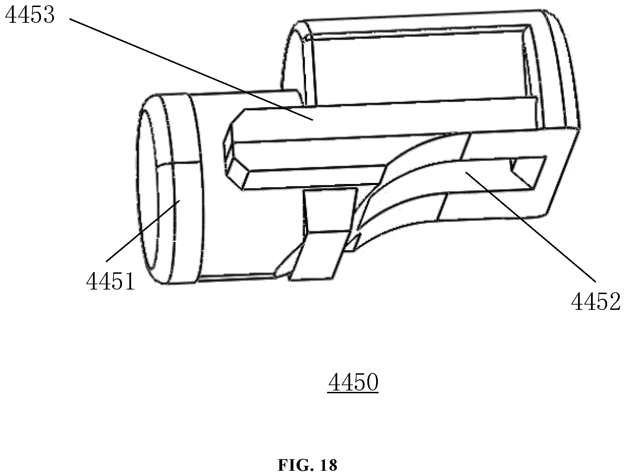

In some embodiments, as shown in FIG. 18, the plug body 4450 includes a cavity 4452, and the cavity includes a downward opening. The first end portion 4411 of the pivot rod 4410 includes the push rod 44111, and the push rod 44111 can freely and movably extend into the cavity 4452. With the rotation of the pivot rod 4410, the push rod 44111 pushes two opposite side walls of the cavity 4452 such that the plug body moves toward or away from the outlet of the water inlet pipe.

In some embodiments, the water tank assembly further includes a fixed jacket 4440 for accommodating the outlet 9410 of the water inlet pipe 9400, the plug body 4450 and the first end portion 4411 of the pivot rod 4410. The fixed jacket 4440 and the water inlet pipe 9400 can be integrally molded to avoid water leakage. A threaded rubber pad 9420 is arranged at a position where the fixed jacket 4440 and the water inlet pipe 9400 are connected to achieve the effect of sealing when assembled on the clean-water tank body. The first end portion 4411 of the pivot rod 4410 is connected between two opposite side walls of the fixed jacket 4440 by means of the fixed rotating shaft 4430 and is configured such that the pivot rod 4410 can rotate around the fixed rotating shaft 4430 relative to the fixed jacket 4440 and push the plug body 4450 to move horizontally.

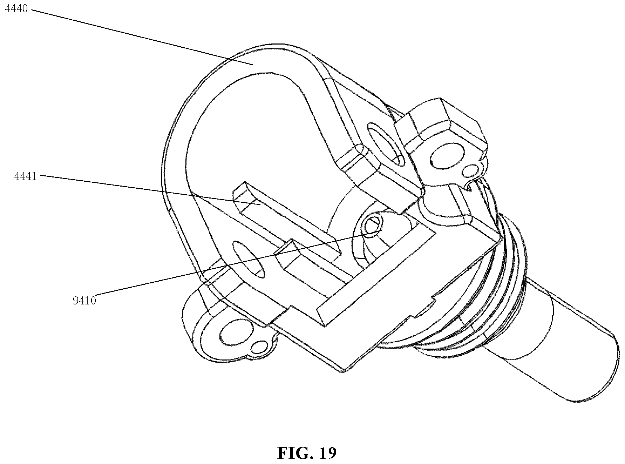

In some embodiments, as shown in FIG. 19, two inner side walls of the fixed jacket 4440 are provided with slide ways 4441, two sides of an outer side wall of the plug body 4450 are provided with slide rails 4453, and the slide rails 4453 and the slide ways 4441 cooperate to achieve sliding connection, which in turn ensures that the plug body 4450 can move in a horizontal direction to accurately block the outlet 9410 of the water inlet pipe.

In some embodiments, as shown in FIG. 18, the plug body further includes a soft rubber pad 4451 arranged on an end surface abutting against the outlet 9410 of the water inlet pipe. The soft rubber pad 4451 is configured to block or unblock the outlet 9410 of the water inlet pipe in response to the plug body 4450 moving toward or away from the outlet 9410 of the water inlet pipe. In some embodiments, as shown in FIG. 19, the outlet of the water inlet pipe is of a conical structure, so as to seal the outlet 9410 of the water pipe after matching with the soft rubber pad 4451.

In some embodiments, as shown in FIG. 13, an overflow hole is formed at the top of the clean-water tank body and communicated with the overflow port 7320 by means of an overflow pipe 9500. After the clean water tank 4000 is full of water, when the water inlet still cannot be completely blocked through sensing at the first position and leakage blocking by the floating valve at the second position as described above, water in the clean water tank can be automatically discharged through the overflow hole, the overflow pipe 9500 and the overflow port 7320, so as to prevent clean water from flowing into the automatic water replacement assembly 7000 and damaging devices.

According to the embodiments of the present disclosure, whether the clean water tank is full of water is detected by means of the floating valve in the clean-water tank body, the floating valve is arranged in the clean-water tank body, and the floating valve moves with the rising of the water level in the clean-water tank body. The control apparatus controls the water inlet pipe to stop replenishing clean water to the clean-water tank body when the floating valve is located at the first position. When the floating valve is located at the second position, the floating valve blocks the outlet of the water inlet pipe, through which water is replenished to the clean-water tank body. In addition, excessive water can be discharged through the overflow hole, thereby preventing, by multiple control methods, water from overflowing the self-cleaning maintenance station after the clean water tank is full.

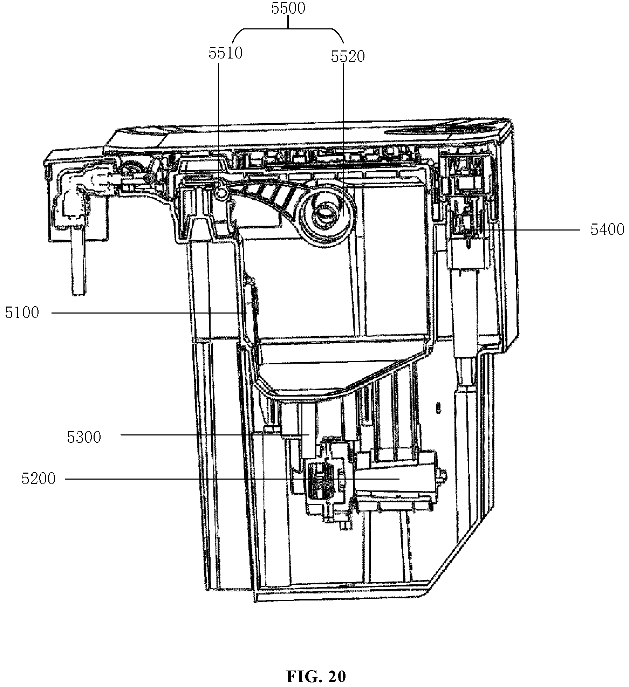

Embodiments of the present disclosure also provide an automatic water replacement assembly. As shown in FIG. 20, the automatic water replacement assembly 7000 includes a control apparatus 7100 and a water tank assembly 7200. The control apparatus 7100 is arranged inside the water tank assembly 7200, and the control apparatus 7100 is configured to realize automatic discharge of sewage out of the water tank assembly 7200. The water tank assembly 7200 includes: a sewage tank body 5100; and a drainage pump 5200 located below the sewage tank body 5100 and configured to provide power for discharging sewage. In response to sewage in the sewage tank body 5100 reaching a preset height, the control apparatus 7100 controls the drainage pump 5200 to start to discharge sewage out of the sewage tank body 5100.

In some embodiments, the water tank assembly further includes: a drainage pipe 5300 connected to a water outlet of the drainage pump 5200; and a drain valve 5400 arranged on the drainage pipe 5300 and configured to open or close the passage of the drainage pipe.

In some embodiments, in response to sewage in the sewage tank body 5100 reaching a preset height, the control apparatus 7100 controls the drain valve 5400 and the drainage pump 5200 to be started in sequence.

In some embodiments, the water tank assembly further includes a full-sewage detection assembly 5500, which is at least partially arranged in the sewage tank body 5100 and configured to detect the water level of sewage in the sewage tank body.

In some embodiments, the full-sewage detection assembly 5500 includes: a full-sewage floating base 5510 arranged at the top of the sewage tank body 5100; and a full-sewage floating portion 5520 connected to the full-sewage floating base 5510 and configured to move relative to the full-sewage floating base with the change of the water level of sewage in the sewage tank body 5100.

In some embodiments, the full-sewage floating portion 5520 is pivotally connected to the full-sewage floating base 5510, and the full-sewage floating portion 5520 is configured to rotate relative to the full-sewage floating base 5510 with the change of the water level of sewage in the sewage tank body 5100.

In some embodiments, the full-sewage detection assembly 5500 further includes: a signal transmitting component configured to transmit a sensing signal; and a signal sensing component configured to receive the sensing signal. One of the signal transmitting component and the signal sensing component is arranged in the full-sewage floating portion 5520, and the other one of the signal transmitting component and the signal sensing component is arranged on a side wall of the sewage tank body 5100. In response to sewage in the sewage tank body 5100 reaching a preset height and the full-sewage floating portion 5520 being located at a preset position, the signal sensing component is triggered to generate a triggering signal, the triggering signal is sent to the control apparatus 7100, and the control apparatus 7100 controls the drainage pump 5200 to start to discharge sewage from the sewage tank body 5100.

In some embodiments, the signal transmitting component includes a magnet, and the signal sensing component includes a Hall element.

In some embodiments, a Hall sensor is arranged inside a water storage chamber 2700 included in a self-cleaning maintenance station body 2000, and generates a sensing signal with a Hall sensor in the full-sewage floating portion 5520. In an initial state of the full-sewage floating portion 5520, the magnet in the full-sewage floating portion 5520 is triggered simultaneously with the Hall sensor inside the water storage chamber 2700 and the Hall sensor on the side wall of the sewage tank body 5100, indicating that the sewage tank is assembled in place and the sewage tank is not full. When more and more sewage is collected, the full-sewage floating portion 5520 floats upwards and is separated from the Hall sensor arranged inside the water storage chamber 2700, indicating that the sewage tank is full, and a signal lamp lights up to start to pump sewage.

In some embodiments, the bottom of the sewage tank body 5100 is funnel-shaped, and an end portion of the bottom of the sewage tank body 5100 away from the top of the sewage tank body is provided with a drainage port communicated with a water inlet of the drainage pump by means of a pipeline.

Finally, it should be noted that: the various embodiments in the description are described in a progressive manner, each embodiment focuses on the differences from other embodiments, and the same or similar parts among the various embodiments may be referred to each other.

The above embodiments are only intended to illustrate, instead of limiting, the technical solutions of the present disclosure. Although the present disclosure has been described in detail with reference to the foregoing embodiments, it should be understood by those of ordinary skill in the art that: modifications can still be made to the technical solutions described in the foregoing embodiments, or equivalent substitutions may be made for some of the technical features, and these modifications or substitutions may not deviate the nature of the corresponding technical solutions from the spirit and scope of the technical solutions of the embodiments of the present disclosure.

## Claims

1. An automatic water replacement assembly, comprising a control apparatus and a water tank assembly, wherein the control apparatus is configured to realize automatic replenishment of clean water to, automatic discharge of sewage from or automatic replenishment of a cleansing liquid to the water tank assembly, and the water tank assembly is configured to be assembled inside a water storage chamber of a self-cleaning maintenance station; and
the water tank assembly comprises a sewage tank, a clean water tank and a water tank top shell, the water tank top shell substantially covers the sewage tank and the clean water tank, and the water tank top shell, the sewage tank and the clean water tank form an integrated structure;
wherein, a part of a tank body of the water tank assembly is located outside the water storage chamber when the water tank assembly is assembled inside the water storage chamber of the self-cleaning maintenance station.

2. The automatic water replacement assembly according to claim 1, wherein the sewage tank and the clean water tank are arranged below the water tank top shell with a space of a preset distance.

3. The automatic water replacement assembly according to claim 1, wherein outer walls of the sewage tank and the clean water tank on a same side are provided with recessed portions formed inwardly, top ends of the recessed portions are provided with a sewage port and a clean water port that penetrate upwards, the sewage port is configured for drawing sewage into the sewage tank, and the clean water port is configured for extracting clean water out of the clean water tank.

4. The automatic water replacement assembly according to claim 1, wherein a water inlet is comprised on a side of the water tank top shell, and the water inlet is connected to the clean water tank to realize automatic replenishment of clean water to the clean water tank by the control apparatus.

5. The automatic water replacement assembly according to claim 1, wherein an overflow port is further comprised on a side of the water tank top shell, the overflow port is connected to the clean water tank, and water in the clean water tank is automatically discharged through the overflow port after the clean water tank is full of water.

6. The automatic water replacement assembly according to claim 1, wherein a drainage port is further comprised on a side of the water tank top shell, the drainage port is connected to the sewage tank, and sewage in the sewage tank is automatically discharged through the drainage port after the sewage tank is full of sewage.

7. The automatic water replacement assembly according to claim 1, wherein an outer side wall of the sewage tank or the clean water tank is provided with a sensor configured to detect that the sewage tank and the clean water tank are assembled to preset positions.

8. The automatic water replacement assembly according to claim 1, wherein the water tank top shell comprises a detachable water tank top cover, and top ends of the sewage tank and the clean water tank extend into the water tank top shell.

9. The automatic water replacement assembly according to claim 1, wherein a side wall of the water tank top shell extends downwards along side walls of the sewage tank and the clean water tank to form a U-shaped structure and enclose the side walls of the sewage tank and the clean water tank.

10. The automatic water replacement assembly according to claim 1, wherein a side wall of the water tank top shell, which is of the U-shaped structure, matches with an edge of an outer side wall of the water storage chamber, and the side wall of the water tank top shell, which is of the U-shaped structure, is located outside the water storage chamber entirely when the water tank assembly is assembled inside the water storage chamber.

11. The automatic water replacement assembly according to claim 1, wherein a side wall of the sewage tank comprises at least one first recess extending upwards from a bottom of the sewage tank, and a side wall of the clean water tank comprises at least one second recess extending upwards from a bottom of the clean water tank, and the first recess and the second recess are configured for limiting at assembly positions of the sewage tank and the clean water tank.

12. The automatic water replacement assembly according to any one of claims 1 to 11, wherein the sewage tank and the clean water tank are made of transparent materials to facilitate observation of liquid levels in the sewage tank and the clean water tank.

13. The automatic water replacement assembly according to claim 1, wherein the clean water tank comprises:
a clean-water floating ball base, arranged at a bottom of a clean-water tank body; and
a clean-water floating ball, connected to the clean-water floating ball base and configured to detect a water level, wherein when the water level is lower than a first preset threshold, a water inlet is controlled by the control apparatus to be opened, to replenish clean water to the clean water tank automatically.

14. The automatic water replacement assembly according to claim 1, wherein the clean water tank further comprises:
a cleansing-liquid floating ball base, arranged at a bottom of a cleansing-liquid tank body; and
a cleansing-liquid floating ball, connected to the cleansing-liquid floating ball base and configured to detect a liquid level of a cleansing liquid, wherein when the liquid level is higher than a second preset threshold, a peristaltic pump is controlled by the control apparatus to replenish the cleansing liquid to the clean water tank.

15. The automatic water replacement assembly according to any one of claims 1 to 14, wherein the sewage tank further comprises:
a sewage floating ball, arranged at a top of the sewage tank and configured to detect a liquid level of the sewage, wherein when the liquid level is higher than a third preset threshold, a sewage pump and a drain valve are controlled by the control apparatus to be opened successively to discharge the sewage out of the sewage tank through a drainage port automatically.

16. An automatic water replacement assembly, comprising a control apparatus and a water tank assembly, wherein the control apparatus is arranged inside the water tank assembly and configured to realize automatic replenishment of clean water and automatic replenishment of a cleansing liquid to the water tank assembly; and
the water tank assembly comprises a water tank top shell and a clean water tank, the water tank top shell covers the clean water tank, and the clean water tank comprises a clean-water tank body and a cleansing-liquid tank body;
wherein the clean-water tank body comprises a water amount detection assembly, and in response to the water amount detection assembly detecting that a water amount in the clean-water tank body reaches a preset value, a preset amount of cleansing liquid is automatically replenished to the clean-water tank body from the cleansing-liquid tank body under control of the control apparatus.

17. The automatic water replacement assembly according to claim 16, wherein the clean water tank comprises a clean-water tank top cover covering the clean-water tank body, and the clean-water tank top cover extends into the water tank top shell.

18. The automatic water replacement assembly according to claim 17, wherein the clean-water tank top cover comprises a groove, and a peristaltic pump is arranged inside the groove and configured to draw the cleansing liquid in the cleansing-liquid tank body into the clean-water tank body under the control of the control apparatus.

19. The automatic water replacement assembly according to claim 18, wherein the peristaltic pump comprises a liquid inlet and a liquid outlet, the liquid inlet extends to be close to a bottom of the cleansing-liquid tank body through a first liquid delivery pipe, and the liquid outlet extends into the clean-water tank body through a second liquid delivery pipe, to draw the cleansing liquid in the cleansing-liquid tank body into the clean-water tank body.

20. The automatic water replacement assembly according to claim 17, wherein the cleansing-liquid tank body comprises a cleansing liquid channel, the cleansing liquid channel extends upwards from an interior of the cleansing-liquid tank body to the clean-water tank top cover along an exterior of the clean-water tank body, for replenishing the cleansing liquid to the cleansing-liquid tank body.

21. The automatic water replacement assembly according to claim 19, wherein the cleansing-liquid tank body comprises:
a cleansing-liquid floating ball base, arranged at a bottom of the cleansing-liquid tank body; and
a cleansing-liquid floating ball, connected to the cleansing-liquid floating ball base and configured to detect a liquid level of the cleansing liquid;
wherein, when the liquid level of the cleansing liquid is lower than a second preset threshold, the cleansing liquid is stopped to be replenished to the clean-water tank body under the control of the control apparatus.

22. The automatic water replacement assembly according to claim 21, wherein the water tank assembly comprises a cleansing-liquid state indicator lamp, and the cleansing-liquid state indicator lamp is controlled to light up when the liquid level of the cleansing liquid is lower than the second preset threshold.

23. The automatic water replacement assembly according to claim 16, wherein a side wall of the water tank top shell extends downwards along a side wall of the clean water tank to form a U-shaped structure and enclosure a side wall of the clean-water tank body.

24. The automatic water replacement assembly according to claim 16, wherein the clean-water tank body comprises:
a clean-water floating ball base, arranged at a bottom of the clean-water tank body; and
a clean-water floating ball, connected to the clean-water floating ball base and configured to detect a water level;
wherein, when the water level is lower than a first preset threshold, a water inlet is controlled by the control apparatus to be opened, to replenish clean water to the clean water tank automatically.

25. The automatic water replacement assembly according to any one of claims 16 to 24, wherein the water amount detection assembly comprises a full-water detection sensor; and
in response to the water amount detection assembly detecting that the water amount reaches the preset value comprises: in response to the full-water detection sensor detecting that the water amount in the clean-water tank body reaches or approaches a full-water amount.

26. The automatic water replacement assembly according to any one of claims 16 to 24, wherein the water amount detection assembly comprises a no-water detection sensor; and
in response to the water amount detection assembly detecting that the water amount reaches the preset value comprises: in response to the no-water detection sensor detecting that the water amount in the clean-water tank body reaches a no-water amount.

27. A self-cleaning maintenance station, comprising a water storage chamber, wherein the water storage chamber is configured to accommodate the automatic water replacement assembly according to any one of claims 1 to 26.
